# EUROPEAN PATENT SPECIFICATION

(11) **EP 3 187 543 B1**
(45) Date of publication and mention of the grant of the patent: **12.05.2021**
(21) Application number: 15822275.2
(22) Date of filing: 20.07.2015
(51) Int. Cl.: C08L 73/00, C08L 55/02, C08G 67/02, B29C 67/24, B60K 5/00, B62D 5/06, F02M 37/04

(54) **POLYKETONE RESIN COMPOSITION HAVING EXCELLENT OIL RESISTANCE**
POLYKETON-HARZ-ZUSAMMENSETZUNG MIT AUSGEZEICHNETEM ÖLFESTIGKEIT
COMPOSITION DE RÉSINE DE POLYCÉTONE AYANT UNE EXCELLENTE RÉSISTANCE À L'HUILE

(30) Priority: 18.07.2014 KR 20140090892; 07.11.2014 KR 20140154627; 19.11.2014 KR 20140161995; 19.11.2014 KR 20140162005; 19.11.2014 KR 20140162015; 19.11.2014 KR 20140161979; 19.11.2014 KR 20140161986; 19.11.2014 KR 20140162012; 19.11.2014 KR 20140162010; 27.05.2015 KR 20150073972; 27.05.2015 KR 20150073979; 27.05.2015 KR 20150073982
(43) Date of publication of application: 05.07.2017
(73) Proprietor: HYOSUNG CHEMICAL CORPORATION, Seocho-gu Seoul, 06578 (KR)
(72) Inventor: YOON, Sung Kyoun, Anyang-si Gyeonggi-do 431-811 (KR); LEE, Jong, Seoul 157-741 (KR); CHOI, Jong In, Seoul 152-755 (KR); CHO, Kyung Tae, Cheongju-si Chungcheongbuk-do 361-846 (KR); HONG, Jong Chul, Uiwang-si Gyeonggi-do 437-807 (KR); KIM, Ka Young, Anyang-si Gyeonggi-do 431-799 (KR)
(74) Representative: v. Bezold & Partner Patentanwälte - PartG mbB
(86) International application number: PCT/KR2015/007507
(87) International publication number: WO 2016/010407

(56) References cited:
- EP-A1- 0 213 671
- EP-A2- 0 457 374
- EP-A2- 0 830 932
- WO-A1-00/42089
- JP-A- H 101 590
- JP-A- 2000 234 054
- KR-A- 20080 061 174
- KR-A- 20110 012 153
- KR-A- 20120 077 807
- US-A- 5 227 437

## Description

### Technical Field

The present invention relates to a polyketone resin composition excellent in oil resistance, calcium chloride resistance and abrasion resistance, more specifically, which is prepared by mixing ABS, fiberglass, sulfonamide-based plasticizer, mineral fillers, etc., and is widely used in industrial o rings, pipe liners, snow chains, automobiles fuel tube, automobile engine cover, automobile cylinder head cover, power steering oil, a reservoir tank, a fuel pump for a vehicle, etc.

### Background Art

Engineering plastics such as Nylon 66, polytetrafluoroethylene (PTFE), polycarbonate (PC) are widely used in various fields such as car interior and exterior materials, electrical and electronic parts, film, etc. because of their great water resistance, heat resistance, abrasion resistance, properties maintenance and Electrical insulation and are easy to mold. However, the engineering plastics have problems such as changes in physical properties due to moisture absorption and deterioration in acid, high-temperature alcohol and hot water, and the like.

In particular, when the engineering plastics applied to the parts that are directly in contact with oil such as industrial o-rings, pipe liners, snow chains, an automobile fuel tube, an automobile engine cover, etc., they are not only weak in oil resistance, but also have a problem with calcium chloride resistance and abrasion resistance.

Polyketone (PK), on the other hand, has great heat, chemical and impact resistance and is also excellent in oil resistance, calcium chloride resistance and abrasion resistance. Therefore, in the above-mentioned application field, Polyketone (PK) is emerging as a new material to replace the conventional nylon 66, polytetrafluoroethylene (PTFE) and Polycarbonate (PC).

It is already known that the polyketone with the same properties as the above is obtained by alternately bonding carbon monoxide and olefin by polymerizing an olefin such as carbon monoxide (CO), ethylene and proplylene as a catalyst using a transition metal complex such as palladium (Pd) or nickel (Ni), or the like.

### (Industrial Materials, December issue, page 5, 1997)

U.S. Patent No. 4,880,903 discloses a linear alternating polyketone terpolymer made of carbon monoxide, ethylene and non-olefinic unsaturation hydrocarbons, for example propylene.

EP 0213 671 A1 discloses polymers of carbon monoxide, ethene and one or more other olefinically unsaturated hydrocarbons, which polymers exhibit a relatively low melting point of between 150 and 245°C, as well as a process for preparing the same.

EP 0 830 932 A2 relates to blow molded containers having good blow moldability and excellent falling strength, moisture-proofness and gas barrier properties and comprising a polyalcohol obtained by reduction of a polyketone.

WO 00/42089 A1 relates to barrier materials having very low oxygen permeabilities which are obtainable by processing a polyketone polymer composition under controlled conditions. US 5 227 437 A relates to compositions comprising isomorphic (i.e. exhibiting a single crystallization temperature) polymer blends of at least two linear alternating polymers of carbon monoxide and one or more ethylenically unsaturated hydrocarbons.

EP 0 457 374 A2 describes a polymer blend with improved toughness and stiffness comprising a linear alternating polymer of carbon monoxide and at least one ethylenically unsaturated compound.

The production method of the polyketone polymer is usually the use of catalyst composition produced from a Group VIII metal compound selected from palladium, cobalt or nickel, anion of non-hydro halogen strongon-hydrohalogentic acid and bidentate ligand of phosphorus, arsenic or antimon. U.S. Patent No. 4,843,144 discloses a process for producing a polymer of carbon monoxide and at least one ethylenically unsaturated hydrocarbon using a catalyst of bidentate ligand of palladium compounds, anions of non-hydro halogenic acids with a pKa of less than 6 and phosphorus.

In addition, according to the recent demand for high value-added and high performance of plastics, and development of high-tech industry, various fillers are used in polyketone. The role of fillers can be seen as cost reduction, improvement of physical properties or quality and improvement of function and processability.

Accordingly, with respect to the mechanical properties of the polyketone blend, researches on polyketones having excellent oil resistance, calcium chloride resistance and abrasion resistance are required due to diversification of thermoplastic plastics application industry field and demand of industries demanding more excellent characteristics.

### Disclosure

### Technical Problem

In order to solve the above problems, the present invention is intended to provide polyketone resin compositions with excellent oil resistance, calcium chloride resistance and abrasion resistance.

### Technical Solution

In order to solve the above problem, the present invention provides a polyketone copolymer having excellent oil resistance comprising repeating units represented by the following general formulas (1) and (2) of which intrinsic viscosity is from 1.0 to 2.0 dl/g and molecular weight distribution is from 1.5 to 2.5

-[-CH₂CH₂-CO]_{X}- (1)

-[-CH₂-CH(CH₃)-CO]y- (2)

wherein x,y represents the mole % of each of general formulas (1) and (2) in the copolymer, and y/x of the general formulas (1) and (2) is from 0.03 to 0.3, and
wherein a ligand of catalyst composition used in polymerization of the polyketone copolymer is ((2,2-dimethyl-1,3-dioxane-5,5-diyl)bis(methylene))bis(bis(2-methoxyphenyl)-phosphine) and a polyketone resin composition characterized in that it is produced by injection molding a blend comprising: a polyketone copolymer of carbon monoxide and at least one olefin, of which intrinsic viscosity is from 1.0 to 2.0 dl/g and molecular weight distribution is from 1.5 to 2.5; and one or two more additive material(s) selected from the group consisting of glass fibers, acrylonitrile butadiene styrene (ABS), sulfonamide-based plasticizers and a mineral filler, and a ligand of catalyst composition used in polymerization of the polyketone copolymer is ((2,2-dimethyl-1,3-dioxane-5,5-diyl)bis(methylene))bis(bis(2-methoxyphenyl)phosphine as a means to solve the problem.

The composition ratio of acrylonitrile butadiene styrene to the total weight of the polyketone composition is preferably 8 to 20% by weight and can be applied to a fuel filler neck tube. The polyketone composition preferably has an oil absorption of 0.15% or less after 48 hours of immersion in 50°C gasoline and the ligand of the catalyst preparation used in the polymerization of the polyketone is (2,2-dimetyl-1,3-dioxane-5,5-diyl)bis(methylene))bis(bis(2-methoxyphenyl)phosphine).

Present invention provides a method of manufacturing a cylinder head cover and a power steering oil reservoir tank for a vehicle that is manufactured by injection molding carbon monoxide and a blend comprising 60 to 85% by weight of a linear alternating polyketone polymer comprising at least one olefinically unsaturated hydrocarbon and having a residual amount of palladium catalyst of 5 to 50 ppm and a molecular weight distribution of 1.5 to 2.5.

Present invention provides a method of manufacturing an industrial o-ring that is manufactured by injection molding carbon monoxide and a linear alternating polyketone polymer comprising at least one olefinically unsaturated hydrocarbon and having a residual amount of palladium catalyst of 5 to 50 ppm and a molecular weight distribution of 1.5 to 2.5 and features the fact that the intrinsic viscosity of the linear alternating polyketone polymer is 1.0 to 2.0 dl/g and the industrial o-ring maintains a level of 85% or more of the impact strength measured after immersing in an engine oil maintained at 50°C for 24 hours, compared with the impact strength measured at a relative humidity of 65% RH at 25°C and is for hydraulic pressure.

Present invention provides a method of manufacturing a pipe liner that is manufactured by injection molding carbon monoxide and a linear alternating polyketone polymer comprising at least one olefinically unsaturated hydrocarbon and having a residual amount of palladium catalyst of 5 to 50 ppm and a molecular weight distribution of 1.5 to 2.5 and features the fact that the intrinsic viscosity of the linear alternating polyketone polymer is 1.0 to 3.0 dl/g and the pipe liner maintains a level of 85% or more of the impact strength measured after immersing in an engine oil maintained at 50°C for 24 hours, compared with the impact strength measured at a relative humidity of 65% RH at 25°C.

Present invention provides a polyketone molded article excellent in calcium chloride resistance is manufactured by injection molding carbon monoxide and a linear alternating polyketone blend comprising at least one olefinic hydrocarbon and characterized by an intrinsic viscosity (LVN) of 1.2 to 2.0 dl/g, a molecular weight distribution of 1.5 to 2.5, and a properties maintenance rate of calcium chloride resistance of 80% or more.

Present invention provides a method of manufacturing a polyketone snow chain excellent in calcium chloride resistance is manufactured by injection molding carbon monoxide and a linear alternating polyketone comprising at least one olefinic hydrocarbon and having a residual amount of palladium catalyst of 5 to 50 ppm and a molecular weight distribution of 1.5 to 2.5 and a blend comprising ABS and is characterized by being preferable that the properties maintenance rate of the calcium chloride resistance is not less than 80%, and that of ABS (ABS) is 15 to 35% by weight based on the total weight, and having a moisture absorption rate of 1.5% or less at a temperature of 50°C and a relative humidity of 90% and an impact strength of 80 kJ/m² or more.

Present invention provides a method of manufacturing polyketone parts for automobile exterior which is manufactured by injection molding carbon monoxide and a linear alternating polyketone comprising at least one olefinic hydrocarbon and characterized by the fact that an impact strength maintenance rate of 80% or more in 5% or 35% aqueous solution of calcium chloride and wherein an intrinsic viscosity is 1.0 to 2.0 dl/g, and the ligand of catalyst composition used in the polymerization of the polyketone is ((2,2-dimethyl-1,3-dioxane-5,5-diyl)bis(methylene))bis-(bis(2-methoxyphenyl)phosphine), and the polyketone parts are wheel cap and its impact strength is not less than 20 kJ/m² and the moisture absorption rate is not more than 1.5% under the condition that the temperature is 50°C and the relative humidity is 90%.

Present invention provides polyketone engine parts which are manufactured by injection molding carbon monoxide, a linear alternating polyketone comprising at least one olefinically unsaturated hydrocarbon and a blend compositions comprising glass fibers and characterized by the fact that a tensile strength maintenance ratio of the linear alternating polyketone when immersed in water and engine oil for 24 hours each is 80% or more, and the engine parts are an engine cylinder block bracket, an engine-type air intake manifold, canister or mission oil storage tank, and the glass fibers is 25 to 35 parts by weight based on 100 parts by weight of the polyketone, and the intrinsic viscosity of the polyketone is 1.0 to 2.0 dl/g.

Present invention provides a polyketone automotive valve body which is manufactured by injection molding a blend of a linear alternating polyketone comprising carbon monoxide and at least one olefinic hydrocarbon of 50 to 90 wt% and glass fibers of 10 to 50 wt% and characterized by the fact that the oil absorption is 0.14% or less after immersing in 50°C gasoline for 48 hours, and the impact strength is 15 kJ/m² or more and the flexural strength is more than 80 Mpa, and the intrinsic viscosity of the polyketone is 1.0 to 2.0 dl/g and the molecular weight distribution is 1.5 to 2.5.

Present invention provides fuel tubes for automobiles which is characterized by the fact that a fuel permeability is 0.005 g.mm/m².day or less at a temperature of 230°C and a relative humidity of 50% RH, and the flexural strength measured after immersing in 600°C gasoline for 3,000 hours was maintained at 98% or more of the flexural strength measured after immersing in 250°C gasoline, and the weight measured after immersing in gasoline at 600°C for 3000 hours is not more than 0.4% of the rate of change in weight measured after immersing in 25°C gasoline.

Present invention provides a polyketone car engine cover which is manufactured by injection molding a blend of a linear alternating polyketone comprising carbon monoxide and at least one olefinic hydrocarbon, glass fibers and mineral fillers and characterized by the fact that wherein the glass fibers are 5 to 30% by weight of the total and the mineral fillers are 10 to 20% by weight, and the intrinsic viscosity of 1.0 to 2.0 dl/g, the molar ratio of ethylene to propylene of 9 to 24: 1 and the molecular weight distribution of 1.5 to 2.57 is preferable, and the ligand of the catalyst composition used in the polymerization of the polyketone is ((2,2-dimethyl-1,3-dioxane-5,5-diyl)bis(methylene))bis(bis(2-methoxyphenyl)phosphine).

Present invention provides a polyketone fuel pump for a vehicle manufactured by injection molding a linear alternating polyketone comprising carbon monoxide and at least one olefinic hydrocarbon, has a tensile strength maintenance ratio of 80% or more after 48 hours of immersion at 50°C and has a molar ratio of ethylene to propylene of 99: 1 to 85:15. The vehicle polyketone fuel pump preferably has a dimensional change ratio of 1.3% to 1.5% in the base state and an intrinsic viscosity of 1.0 to 2.0 dl/g of the polyketone, and the ligand of the catalyst composition used in the catalyst composition is ((2,2-dimethyl-1,3-dioxane-5,5-diyl) bis (methylene)) bis (bis (2-methoxyphenyl) phosphine).

### Advantageous Effects

The polyketone resin composition of the present invention is excellent in oil resistance, calcium chloride resistance and abrasion resistance, and can be used for industrial o-rings, pipe liners, snow chains, wheel caps, engine parts, automobile valve bodies, automobile fuel tubes, a steering oil reservoir tank, a fuel pump for a vehicle, and the like.

### Detailed Description of the Preferred Embodiments

### Hereinafter, the present invention will be described in detail.

The polyketone resin used in the present invention is a thermoplastic synthetic resin which is an engineering plastic and recently developed as a new resin which is excellent in mechanical properties such as impact strength and molding properties and is usefully applied to various molded articles and parts. The mechanical properties of polyketone resin belong to the category of high performance plastics, and they are attracting much attention as eco-friendly materials because they are polymeric materials synthesized from carbon monoxide as a raw material. Polyketone resin has lower moisture absorption than nylon material, so it is possible to design various products with less changes in dimensions and physical properties due to moisture absorption. Especially, polyketone resin has a lower density than aluminum material and is suitable for weight reduction of products.

The present invention provides an industrial o-ring made by injection molding a linear alternating polyketone polymer composed of carbon monoxide and at least one olefinically unsaturated hydrocarbon and having a residual palladium catalyst of 5 to 50 ppm and a molecular weight distribution of 1.5 to 2.5. At this time, the industrial O-ring of the present invention is characterized in that polyketone is injected in the form of a ring to be used for sealing of a device that reciprocates like a pump.

The present invention provides a cylinder head cover, and a power steering oil reservoir tank for a vehicle made by injection molding a blend composed of 60 to 85% by weight of a linear alternating polyketone polymer consisting of carbon monoxide and at least one olefinically unsaturated hydrocarbon and having a residual amount of palladium catalyst of 5 to 50 ppm and a molecular weight distribution of 1.5 to 2.5, % of the total weight and 15 to 40% by weight of glass fibers.

At this time, the glass fibers preferably have a particle diameter of 10 to 15 µm, but the present invention is not limited thereto. If the particle size of the glass fiber is less than 10 µm, the shape of the glass fiber may be changed and the mechanical properties may be deteriorated.

The present invention provides a pipe liner made by injection molding a linear alternating polyketone polymer composed of carbon monoxide and at least one olefinically unsaturated hydrocarbon and having a residual amount of palladium catalyst of 5 to 50 ppm and a molecular weight distribution of 1.5 to 2.5. At this time, the pipe liner of the present invention plays a role of preventing the corrosion of the steel pipe by inserting the polyketone into the steel pipe by making the pipe through the extrusion process. The pipe liner according to the present invention is characterized in that the impact strength measured after immersing in engine oil maintained at 50°C for 24 hours is maintained at 85% or more of the impact strength measured at 25°C and relative humidity 65%.

More particularly, the present invention relates to a valve body made of a polyketone material. In general, an automatic transmission has a torque converter, a multi-speed change mechanism connected to the torque converter and a hydraulic operation friction element for selecting one of the gear stages of the transmission mechanism according to the running state of the transmission mechanism. The hydraulic control system of such an automatic transmission for an automobile has a function of automatically selecting an appropriate shift according to the running condition of the vehicle by selecting a friction element through a control valve and operating the hydraulic pressure generated from the oil pump. Such a hydraulic control system includes a pressure regulating means for regulating the hydraulic pressure generated from the oil pump, a manual and automatic speed change control means capable of forming a speed change mode, a hydraulic control means for controlling the transmission feeling and responsiveness to form a smooth shift mode at the time of shifting, a damper clutch control means for operating the damper clutch of the torque converter, and a hydraulic pressure distributing means for distributing a proper hydraulic pressure supply to each friction element. The automotive automatic transmission generally used includes a pump impeller connected to the output shaft of the engine and driven together, a turbine runner connected to the input shaft of the transmission and operating together, and a fluid torque converter including a stator disposed between the impeller and the turbine runner.

With this arrangement, the fluid is circulated by the pump impeller driven by the engine by the assist function of the stator, which causes the flow of the pump impeller in the direction not to interfere with the rotation of the pump impeller when the fluid enters the impeller from the turbine runner. The automatic transmission is made by changing the transmission ratio in the planetary gear unit by the operation of a friction element such as a clutch or kick-down brake for each gear position. In addition, the friction element is selectively operated by changing the flow direction of the hydraulic pressure by a plurality of valves of the hydraulic control apparatus. The manual valve performs port conversion at the selected position of the driver's shift lever, and is connected to a channel through which the fluid pressure can be supplied to the shift control valve.

In particular, the hydraulic control means has a pressure control valve controlled by the transmission control unit so that the hydraulic pressure delivered to the hydraulic pressure distributing means has an appropriate pressure, and a pressure control solenoid valve for controlling the pressure control valve.

These pressure control solenoid valves are mainly used with 2-way valves, but they are replaced with 3-way valves because of their poor control-pressure ripple characteristics and control the pressure control valves. The valve body made of the above valves is highly likely to be exposed to oil and the like, and the present invention uses a polyketone which is a material having excellent oil resistance and impact resistance as a material forming the valve body.

In the present invention, conventionally known additives such as an antioxidant, a stabilizer, a filler, a refractory material, a releasing agent, a coloring agent and other materials may be included in order to improve processability and physical properties of the polymer. A polyketone snow chain can be produced by extrusion molding or injection molding of the above-mentioned polyketone. The manufactured snow chains have excellent resistance to chemicals with a maintenance rate of calcium chloride resistance of 80% or more and a water absorption rate of 1.5% or less at a temperature of 50°C and a relative humidity of 90%. At this time, the impact strength of the snow chain is at least 80 kJ/m², and when the impact strength is less than 80 kJ/m², it can be easily broken by impact.

Hereinafter, the production process of the polyketone will be described.

Polyketone manufacturing method under the presence of (a) Group 9, Group 10 or Group 11 transition metal compound, (b) organic metal complex catalyst comprising ligand having Group 15 element in polyketone manufacturing method by terpolymerization of carbon monoxide, ethylenically and propylenically unsaturated compound among liquid medium, the carbon monoxide, ethylene, and propylene liquefied polymerized in mixed solvent of alcohol (for example, methanol) and water, and produces linear terpolymer, and for the mixed solvent, mixture of methanol 100 part by weight and water 2 to 10 part by weight can be used. In mixed solvent if content of water is less than 2 part by weight, ketal is formed and thermal stability can be declined in process, and if content of water is more than 10 part by weight, mechanical properties of product can be declined.

In the present invention, not only methanol, dichloromethane or nitromethane, which has been conventionally used for producing polyketones, but also mixed solvents composed of acetic acid and water, ethanol, propanol and isopropanol can be used as the liquid medium. Particularly, when a mixed solvent of acetic acid and water is used as a liquid medium for the production of polyketone, the catalytic activity can be improved while reducing the production cost of polyketone. Also, since the use of methanol or a dichloromethane solvent forms a mechanism to induce a stopping reaction in the polymerization step, the use of acetic acid or water other than methanol or dichloromethane in the solvent does not have a probable effect of stopping the catalytic activity, it plays an important role in improvement.

In this case, for liquid medium, methanol, dichloromethane or nitromethane which were mainly used in conventional polyketone manufacturing are not used, and mixed solvent comprising acetic acid and water is used. By using mixed solvent of acetic acid and water for liquid medium in polyketone manufacture, manufacturing cost of polyketone is reduced and catalytic activity is enhanced.

In case of using mixed solvent of acetic acid and water for liquid medium, if concentration of water is less than 10 vol%, it impacts less in catalyst activity, and if concentration is more than 10 vol%, catalyst activity is rapidly increased. Meanwhile, if concentration of water is more than 30 vol%, catalyst activity tends to decrease. Therefore, for liquid medium, mixed solvent comprising acetic acid of 70-90 vol% and water of 10-30 vol% is preferably used.

In this case, catalyst comprises periodic table (IUPAC Inorganic Chemistry Nomenclature revised edition, 1989) (a) Group 9, Group 10 or Group 11 transition metal compound, (b) ligand having Group 15 element.

Among Group 9, Group 10 or Group 11 transition metal compound (a), examples of Group 9 transition metal compound are cobalt or ruthenium complex, carbon acid salt, phosphate, carbamate, sulfonate, and etc., specific examples are cobalt acetate, cobalt acetylacetate, ruthenium acetate, trifluoro-ruthenium acetate, ruthenium acetylacetate, trifluoro-methane sulfonic acid, and etc.

Examples of Group 10 transition metal compound are nickel or palladium complex, carbon acid salt, phosphate, carbamate, sulfonate, and etc., specific examples are nickel acetate, nickel acetylacetate, palladium acetate, trifluoro-palladium acetate, palladium acetylacetate, palladium chloride, bis(N,N-diethyl carbamate)bis(diethylamine)palladium, palladium sulfate, and etc.

Examples of Group 11 transition metal compound are copper or silver complex, carbon acid salt, phosphate, carbamate, sulfonate, and etc., specific examples are copper acetate, trifluoro-copper acetate, copper acetylacetate, silver acetate, trifluoro-silver acetate, silver acetylacetate, trifluoro-methane sulfonic silver, and etc.

Among them transition metal compound (a) preferable in cost and economically are nickel and copper compound, transition metal compound (a) preferable in the yield and molecular weight of polyketone is palladium compound, and in terms of enhancing catalyst activity and intrinsic viscosity using palladium acetate is most preferable.

The ligand having Group 15 element which is 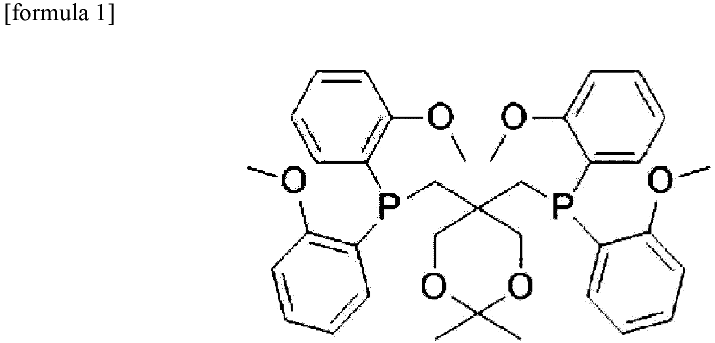 ((2,2-dimethyl-1,3-dioxane-5,5-diyl)bis(methylene))bis(bis(2-methoxyphenyl)phosphine) of formula 1 shows the same activity expression as 3,3-bis-[bis-(2-methoxyphenyl)-phosphonylmethyl]-1,5-dioxa-spiro[5,5]undecane which is known as showing highest activity among polyketone polymerization catalyst introduced until now, and the structure is simpler and molecular weight is lower. Therefore, the present invention obtains highest activity as polymerization catalyst in relevant field, and providing novel polyketone polymerization catalyst with lower manufacturing cost and production cost. Manufacturing method of ligand for polyketone polymerization catalyst is as follows.

Using bis(2-methoxyphenyl)phosphine, 5,5-bis(bromomethyl)-2,2-dimethyl-1,3-dioxane and sodium hydride(NaH) and obtaining ((2,2-dimethyl-1,3-dioxane-5,5-diyl)bis(methylene))bis(bis(2-methoxyphenyl)phosphine) features manufacturing method of ligand for polyketone polymerization catalyst. Manufacturing method of ligand for polyketone polymerization catalyst of the present invention is different from conventional synthesis method of 3,3-bis-[bis-(2-methoxyphenyl)phosphonylmethyl]-1,5-dioxa-spiro[5,5]undecane as under safe environment not using lithium through simple process, ((2,2-dimethyl-1,3-dioxane-5,5-diyl)bis(methylene))bis(bis(2-methoxyphenyl)phosphine) can be commercially mass-synthesized.

In a preferred embodiment, manufacturing method of ligand for polyketone polymerization catalyst of the present invention goes through (a) a step of inserting bis(2-methoxyphenyl)phosphine and dimethylsulfoxide (DMSO) to reaction vessel under nitrogen atmosphere and adding sodium hydride in room temperature and stirring; (b) a step of adding 5,5-bis(bromethyl)-2,2-dimethyl-1,3-dioxane and dimethylsufoxide to obtained mixed solution and stirring and reacting; (c) a step of after completing reaction inserting methanol and stirring; (d) a step of inserting toluene and water after separating layer, cleaning oil layer with water and drying with anhydrous sodium sulfate, pressure filtering and pressure concentration; and (e) a step of recrystallizing residue under methanol and obtaining ((2,2-dimethyl-1,3-dioxane-5,5-diyl)bis(methylene))bis(bis(2-methoxyphenyl)phosphine).

The amount of Group 9, Group 10, or Group 11 transition metal compound (a) differs suitable value according to selected ethylenically and propylenically unsaturated compound type or different polymerization condition, so the range is not uniformly limited, but conventionally capacity of reaction zone is 0.01 to 100 mmol per liter, and preferably 0.01 to 10 mmol. Capacity of reaction zone refers to capacity of liquid phase of reactor. The amount of ligand (b) is not limited, but transition metal compound (a) per 1 mol is conventionally 0.1 to 3 mol and preferably 1 to 3 mol.

Examples of the anion (c) of an acid having a pKa of 4 or less include an anion of an organic acid having a pKa of 4 or less such as trifluoroacetic acid, trifluoromethanesulfonic acid, p-toluenesulfonic acid, or m-toluenesulfonic acid; Anions of inorganic acids having a pKa of 4 or less such as perchloric acid, sulfuric acid, nitric acid, phosphoric acid, heteropoly acid, tetrafluoroboric acid, hexafluorophosphoric acid, and fluorosilicic acid; And anions of boron compounds such as trispentafluorophenylborane, trisphenylcarbenium tetrakis (pentafluorophenyl) borate, and N, N-dimethylarinium tetrakis (pentafluorophenyl) borate.

Particularly, the anion (c) of the acid having a pKa of 4 or less, which is preferable in the present invention, is p-toluenesulfonic acid, which has high catalytic activity when used in combination with a mixed solvent of acetic acid and water as a liquid medium, and it is possible to produce a polyketone having a high intrinsic viscosity suitable for the polyketone.

For the molar ratio of (a) the ninth, tenth or eleventh group transition metal compound and (b) the ligand having an element of Group 15 element, 0.1 to 20 moles of the Group 15 element of the ligand per 1 mole of the palladium element, preferably 0.1 to 10 moles, more preferably 0.1 to 5 moles is preferred. When the ligand is added in an amount of less than 0.1 mole based on the palladium element, the binding force between the ligand and the transition metal decreases, accelerating the desorption of palladium during the reaction, and causing the reaction to terminate quickly. When the ligand of more than 20 mol relative to the palladium element is added, the ligand is shielded from the polymerization reaction by the organometallic complex catalyst, so that the reaction rate is remarkably lowered.

For the molar ratio of (a) the ninth, tenth or eleventh group transition metal compound and (c) anions of acids having a pKa of 4 or less, 0.1 to 20 moles of the acid per 1 mole of the palladium element, preferably 0.1 to 10 moles, more preferably 0.1 to 5 moles is preferred. When the acid is added in an amount of less than 0.1 mole based on the palladium element, the effect of improving the intrinsic viscosity of the polyketone is unsatisfactory. When the acid of more than 20 mol relative to the palladium element is added, the activity of the catalyst for producing polyketone tends to be rather reduced.

Moreover, adding benzophenone could be another feature in polymerization of the polyketone.

In the present invention, in polymerization of polyketone by adding benzophenone, it can achieve effects of enhancing intrinsic viscosity of polyketone. the (a) Group 9, Group 10 or Group 11 transition metal compound and benzophenone molar ratio is 1: 5 to 100, preferably 1: 40 to 60. If transition metal and benzophenone molar ratio is less than 1:5, effects of enhancement in intrinsic viscosity of polyketone is not satisfactory, and if transition metal and benzophenone molar ratio is more than 1:100, catalyst activity of produced polyketone tends to decrease therefore not preferable.

In the present invention, the reaction gas to be reacted with the catalyst for producing polyketone is preferably a mixture of carbon monoxide and an ethylenically unsaturated compound.

Examples of ethylenically unsaturated compound polymerized with carbon monoxide are ethylene, propylene, 1-butene, 1-hexene, 4-methyl-1-pentene, 1-octene, 1-decene, 1-dodecene, 1-tetradecene, 1-hexadecene, α-olefin such as vinyl cyclohexane; alkenyl aromatic compound such as styrene, α-methyl styrene; cyclopentane, norbornene, 5-methyl norbornene, tetracyclododecene, tricyclo dodecane, tricyclo undecene, pentacyclopentadecene, petacyclohexadecene, 8-ethyltetracyclododecene; halogenation vinyl such as vinyl chloride; acrylic ester such as ethyl acrylate and methyl acrylate. Among them preferable ethylenically unsaturated compound is α-olefin, and more preferably α-olefin with carbon number of 2 to 4, and most preferably ethylene, in terms of producing terpolymer polyketone inserting 120 mol% of propylene.

In this case, adjusting carbon monoxide and ethylenically unsaturated compound inserting ratio to 1:12 (molar ratio), and adjusting propylene to 120 mol% to the total mixed gas are preferable. In case of manufacturing polyketone, it is general to make carbon monoxide and ethylenically unsaturated compound inserting ratio to 1:1, but in the present invention wherein acetate and water is used as mixed solvent for liquid medium and adding benzophenone in polymerization, in the case of making carbon monoxide and ethylenically unsaturated compound inserting ratio to 1:12 and adjusting propylene 120 mol% to the total mixed gas not only enhances processability but also simultaneously achieves enhancement in catalyst activity and intrinsic viscosity. In case of the inserting amount of propylene is less than 1 mol%, it can no attain effects of terpolymer to lower melting temperature, and in the case of the inserting amount of propylene is more than 20 mol%, problem occurs such as impediment in enhancing intrinsic viscosity and catalyst activity, so it is preferable to adjust inserting ratio to 120 mol%.

Moreover, in the process, for liquid medium, mixed solvent of acetate and water is used, and adding benzophenone in polymerization, and by inserting carbon monoxide and ethylenically unsaturated compound and one or more olefin-based unsaturated compound not only polyketone catalyst activity and intrinsic viscosity enhance but also it is possible to produce terpolymer polyketone having high intrinsic viscosity by setting polymerization time for 12 hours, and this is different from conventional technology which set polymerization time for at least 10 hours to enhance intrinsic viscosity.

Terpolymer of carbon monoxide, the ethylenically unsaturated compound and propylenically unsaturated compound occurs by organic metal complex catalyst comprising the Group 9, Group 10 or Group 11 transition metal compound (a), ligand having Group 15 element (b), and the catalyst is formed by contacting to the 2 components. Contacting method can be selected arbitrary. In other words, among suitable solvent, solution mixed 2 components in advance can be used, or each 2 components can separately be provided to polymerization system and contact in polymerization system.

In the present invention, conventionally known additives such as an antioxidant, a stabilizer, a filler, a refractory material, a releasing agent, a coloring agent, and other materials may be further added to improve the processability and physical properties of the polymer.

For polymerization method, solution polymerization method using liquid medium, suspension polymerization method, gas phase polymerization which impregnate high concentration catalyst solution to small polymer. Polymerization can be batch or continuous. Reactor used in polymerization can be used as the known or by processing. In regard of polymerization temperature there is no limit, generally 40°C to 250°C, preferably 50°C to 180°C is adopted. In regard of pressure in polymerization there is no limit, but generally the atmospheric pressure or 20 MPa, preferably 4 to 15 MPa.

Monomer unit is in alternately, thereby polymer comprises formula-(CO)-A'- (wherein A' is monomer unit oriented from applied monomer A) unit, one or more olefin-based unsaturated compound (simply shown as A) and high molecular weight linear polymer of carbon monoxide can produce monomer by contacting catalyst composition solution containing palladium in diluted solution which polymer doesn't dissolve. During polymerization process, polymer is obtained in form of suspension in diluted solution. Polymer manufacture is mainly done by batch.

Batch manufacture of polymer is conventionally adopting catalyst in reactor containing diluted solution and monomer and having desired temperature and pressure. As polymerization is in progress, pressure decreases, and concentration of polymer in diluted solution increases, and viscosity of suspension increases. Viscosity of suspension, for example until it reaches at high value which occurs difficulty in heat removal, polymerization continues. During batch polymerization manufacture, by adding monomer to reactor during polymerization, not only temperature but also pressure can be maintained constantly.

As described above, the polyketone is produced through a polymerization process according to the above-described production process.

Meanwhile, Polyketone according to the present invention is linear alternative structure, and unsaturated hydrocarbon per one molecule comprises carbon monoxide. The polyketone is used as precursor and number of suitable ethylenically unsaturated hydrocarbon is 20 or less and preferably 10 or less carbon atoms. Also, ethylenically unsaturated hydrocarbon is ethane and α-olefin, for example, aliphatic such as propene, 1 -butene, iso-butene, 1-hexene, 1-octene, or comprising aryl substituent on another aliphatic molecular, especially aryl aliphatic comprising aryl substituent on ethylenically unsaturated carbon atom. Examples of aryl aliphatic hydrocarbon among ethylenically unsaturated hydrocarbon are styrene, p-methyl styrene, p-ethyl styrene, and m-isopropyl styrene. Polyketone polymer preferably used in the present invention is copolymer of carbon monoxide and ethane or the second ethylenically unsaturated hydrocarbon having carbon monoxide, ethane, and at least 3 carbon atoms, especially α-olefin-based terpolymer such as propene.

When the polyketone terpolymer is used as the main polymer component of blend of the present invention, regarding each unit comprising the second hydrocarbon part in terpolymer, there are at least 2 units comprising ethylene part. Number of units comprising the second hydrocarbon part is preferably 10 to 100.

According to the present invention, the polyketone polymer is a copolymer comprising repeating units represented by the general formulas (1) and (2), and y / x is 0.03 to 0.3. When the value of the y / x value is less than 0.03, there is a limit in that the meltability and processability are inferior. When it exceeds 0.3, the mechanical properties are poor. Further, y / x is more preferably 0.03 to 0.1.

-(CH₂CH₂-CO)x- formula (1)

-(CH₂CH(CH₃)-CO)y- formula (2)

Also, melting point of polymer can be adjusted by adjusting ratio of ethylene and propylene of polyketone polymer. For example, in case of molar ratio of ethylene : propylene : carbon monoxide is adjusted to 46 : 4 : 50, melting point is approximately 220°C, and if molar ratio is adjusted to 47.3 : 2.7 : 50, melting point is adjusted to 235°C.

Number average molecular weight measured by gel penetration and chromatography is preferably 100 to 200,000 especially 20,000 to 90,000 of polyketone polymer. Physical properties of polymer according to molecular weight, according to whether polymer is copolymer or terpolymer, or in case of terpolymer, it is determined according to properties of the second hydrocarbon portion. Polymer used in the present invention has conventional melting point of 175°C to 300°C, and generally 210°C to 270°C. Limiting Viscosity Number (LVN) of polymer measured by using standard viscosity measuring device with HFIP (Hexafluoroisopropylalcohol) in 60°C is 0.5 dl/g to 10 dl/g, and preferably 1 dl/g to 2 dl/g. If the intrinsic viscosity is less than 0.5 dl/g, the mechanical properties are deteriorated. If the intrinsic viscosity exceeds 10 dl/g, the workability is deteriorated.

A preferred method of producing a polyketone polymer is disclosed in U.S. Patent No. 4,843,144. In the presence of a catalyst composition suitably produced from a palladium compound (measured in water at 18 DEG C) and an anion of a non-hydrohalogenic acid having a pKa of less than 6 or preferably less than pKa 2 and a bidentate ligand of phosphorus, carbon monoxide and a hydrocarbon monomer are contacted under polymerization conditions to prepare a polyketone polymer.

As a production method of the polyketone polymer, liquid phase polymerization in which carbon monoxide and olefin are carried out in an alcohol solvent through a catalyst composition composed of a palladium compound, an acid having 6 or less of PKa, and a ligand compound of phosphorus can be employed. The polymerization temperature is preferably from 50 to 100°C and the reaction pressure is from 40 to 60 bar. The polymer is recovered through filtration and purification processes after polymerization, and the remaining catalyst composition is removed with a solvent such as alcohol or acetone.

Meanwhile, polyketone molecular weight distribution is 1.5 to 2.5, more preferably 1.8 to 2.2. If molecular weight distribution is less than 1.5, polymerization transference number declines, and if molecular weight distribution is more than 2.5, moldability declines. In order to adjust the molecular weight distribution adjusting proportionately according to palladium catalyst amount and polymerization temperature is possible. In other words, if palladium catalyst amount increases, or polymerization temperature is more than 100°C, molecular amount distribution increases.

In order to further improve the oil resistance, calcium chloride resistance and abrasion resistance of the polyketone, acrylonitrile-butadiene-styrene (ABS), glass fiber, sulfonamide plasticizer, mineral filler and the like also may be included.

The ABS, as the rubber-modified styrene copolymer resin, is produced by emulsion polymerization, suspension polymerization, solution polymerization, bulk polymerization, suspension polymerization, and the emulsion polymerization method is particularly preferred. The weight of ABS to be added is preferably 5 to 50 parts by weight, more preferably 5 to 30 parts by weight, and still more preferably 8 to 20 parts by weight, based on 100 parts by weight of polyketone. When the amount of ABS to be added is less than 5 parts by weight, the oil resistance, calcium chloride resistance and abrasion resistance of the polyketone resin composition are not greatly improved. When the amount exceeds 50 parts, the mechanical strength, dimensional stability and molding properties may be deteriorated.

The ABS resin produced by such an emulsion polymerization method has a good mechanical property and glossiness because the rubber particles present in the styrene-acrylonitrile copolymer as a dispersed phase in the continuous phase have an average size of 0.2 to 1.5. However, due to the nature of the emulsion polymerization process, the emulsifier and coagulant that must be used must not be completely removed in the coagulation and dewatering process, but remain in the final product, resulting in deterioration of properties and it is difficult to treat the contaminated water used as the polymerization medium. In addition, since the step of post-polymerization coagulation and dehydration must be separately performed, it is uneconomical as compared with the continuous polymerization.

The massive polymerization is carried out by dissolving a certain amount of butadiene rubber or styrene-butadiene rubber in a solution of a styrene monomer and an acrylonitrile monomer dissolved in a reaction medium, dissolving a certain amount of a reaction initiator, a molecular weight modifier and other additives followed by heating to effect polymerization. As the polymerization progresses, such a bulk polymerization produces SAN which is a copolymer of a styrene-based monomer and an acrylonitrile-based monomer. At this time, SAN reacts with a butadiene rubber in which a styrene-based monomer and an acrylonitrile-based monomer are dissolved or a styrene-butadiene rubber to produce a grafted SAN copolymer. The resulting SAN copolymer does not mix with the rubber dissolved in the reaction medium from the beginning of the reaction and forms two phases to make the entire polymerization solution heterogeneous. At the beginning of the polymerization reaction in which the conversion rate is low, the rubber phase dissolved in the polymerization solution forms a continuous phase, but when the volume of the copolymer of the styrene or styrene derivative and the acrylonitrile or acrylonitrile derivative increases as the reaction progresses, the copolymer becomes a continuous phase when the volume of the copolymer exceeds the volume of the rubber in the polymerization solution. This phenomenon is called phase change, and the point at which the volume of the copolymer phase becomes equal to the volume of the rubber phase is called the phase change point. After the phase change has taken place, the rubber phase becomes a dispersed phase to form the rubber particles in the finally produced resin. The ABS resin thus produced has excellent moldability, dimensional stability of the molded article, and impact resistance, and is applied to various fields such as home appliances, office equipment parts, and automobile parts.

The weight of the high-impact ABS is 5 to 50% by weight, preferably 5 to 30% by weight, more preferably 8 to 20% by weight based on the total weight. If the content of the polyketone resin is less than 50% by weight, the inherent oil resistance, mechanical strength, dimensional stability and molding characteristics of the polyketone resin may be lowered, resulting in lack of practicality. If the content exceeds 95%, it may be difficult to impart a desired level of abrasion resistance and impact strength.

In addition, carbon fiber, mica, and talc may be added to the composition to reinforce mechanical properties. Antioxidants and pigments may also be added as desired. Such additives can be suitably used by those skilled in the art.

The glass fiber preferably has a particle diameter of 10 to 13 µm, and is preferably included in an amount of 25 to 35 parts by weight based on 100 parts by weight of the polyketone. When the content of the glass fiber is less than 25 parts by weight, mechanical stiffness may be deteriorated. When the amount of the glass fiber exceeds 35 parts by weight, the viscosity of the glass fiber may be excessively increased and the extrusion and injection workability may be deteriorated and the appearance quality may be deteriorated.

It is preferable that the sulfonamide-based plasticizer is 1 to 10 parts by weight based on 100 parts by weight of the polyketone. If the content of the plasticizer is less than 1 part by weight, the fuel permeability is too high to fit the fuel tube, and if it exceeds 10 parts by weight, the flexural strength, which is a characteristic of the polyketone, is low and processing is not easy.

The mineral filler serves to prevent warpage of the product. As the mineral filler, for example, silica (SiO₂), magnesium oxide (MgO), talc, calcium carbonate, asbestos, kaolin and the like can be used and other minerals can be used as needed and are not limited to a specific kind.

In the present invention, it is preferable to use a mineral filler mixed with 60 to 75% by weight of silica and 25 to 40% by weight of magnesium oxide.

The average particle diameter of the mineral filler is preferably 4 to 6 µm and more preferably 10 to 20 parts by weight based on 100 parts by weight of the polyketone. If the content of the mineral filler is less than 10 parts by weight, the product may be warped, and if it exceeds 20 parts by weight, the impact strength of the product may deteriorate and the appearance may be deteriorated.

The following statement describes manufacturing method for producing polyketone composition product of the present invention.

Manufacturing method according to the present invention comprises a step of preparing catalyst composition comprising palladium compound, acid with 6 or less pKa, bidentate ligand compound of phosphorus; a step of preparing mixed solvent (polymerization solvent) comprising alcohol (for example, methanol) and water; a step of producing linear terpolymer of carbon monoxide, ethylene, and propylene in process of polymerization under the presence of the catalyst composition and mixed solvent; a step of yielding polyketone polymer by removing remained catalyst composition with solvent (for example, alcohol and acetone) in the linear terpolymer; and a step of mixing the polyketone resin with a flame retardant.

As the palladium compound constituting the catalyst composition, palladium acetate can be used, and the amount of the palladium compound to be used is suitably 10 -3 to 10 -1 mole.

For acid having 6 or less pKa value comprising the catalyst composition is in group of trifluoro acetate, p-toluenesulfonic acid, sulfuric acid, and sulfonic acid, one or more kind selected, preferably trifluoro acetate can be used, and the amount is preferably 6 to 20 mol equivalent to palladium compound.

Moreover, the bidentate ligand compound of the phosphorous comprising the catalyst composition is ((2,2-dimethyl-1,3-dioxane-5,5-diyl)bis(methylene))bis(bis(2-methoxyphenyl)phosphine), and the amount is preferably 1 to 20 (mol) equivalent to palladium compound.

The carbon monoxide, ethylene and propylene liquefied polymerized in mixed solvent of alcohol (for example, methanol) and water, and produces linear terpolymer, for the mixed solvent, methanol 100 parts by weight and water 2 to 10 parts by weight can be used. If content of water in mixed solvent is less than 2 parts by weight, ketal is formed and thermal stability can be declined in process, and if it is more than 10 parts by weight, mechanical properties of product can be declined.

Also, in the polymerization, reaction temperature is preferably 50 to 100°C and reaction pressure is preferably 40 to 60 bar. Produced polymer is retrieved through filtering and cleaning process after polymerization, and remained catalyst composition is removed by solvent such as alcohol or acetone.

In the present invention, the obtained polyketone polymer is mixed with glass fiber, compressed with extruder, and finally obtains blend composition. The blend is inserted to biaxial extruder and produced by melting, mixing, and pressing.

At this time, the extrusion temperature is preferably 230 to 260°C, and the screw rotation speed is preferably in the range of 100 to 300 rpm. If the extrusion temperature is less than 230°C, kneading may not occur properly, and if it exceeds 260°C, problems related to the heat resistance of the resin may occur. If the screw rotation speed is less than 100 rpm, smooth kneading may not occur.

The polyketone composition produced through the above process is excellent in oil resistance, calcium chloride resistance, and abrasion resistance and can be applied to industrial o-rings, pipe liners, snow chains, automobile fuel tubes, automobile engine covers, and the like but is not limited thereto.

In the present invention, conventionally known additives such as an antioxidant, a stabilizer, a filler, a refractory material, a releasing agent, a coloring agent and other materials may be included in order to improve processability and physical properties of the polymer. The polyketone part can be produced by extrusion molding or injection molding of the polyketone as described above. At this time, the polyketone of the automotive polyketone part is excellent in oil resistance. When a tensile strength maintenance rate measured at the polyketone base state after 48 hours of immersion in 50°C gasoline has of 80% or more and a dimensional change rate of 1.3% to 1.5%.

Therefore, the polyketone part produced by the present invention has excellent oil resistance and dimensional stability.

Hereinafter, the present invention will be described in detail by way of examples. However, these examples are provided only for the understanding of the present invention, and the scope of the present invention is not limited to these examples in any sense. The invention is illustrated in detail by the following non-limiting examples.

### Example 1

In the presence of the catalyst composition consisting of palladium acetate, anion of trifluoroacetic acid and (2, 2-dimethyl-1,3-dioxane-5,5-diyl) bis (methylene)) bis (bis (2-methoxyphenyl) phosphine), the linear terpolymer of carbon monoxide, ethylene and propylene was polymerized in a solvent of 70 to 90 ° C in the presence of 5 parts by weight of water relative to 100 parts by weight of methanol. The molar ratio of ethylene to propene in the polyketone terpolymer prepared above was 46:4. On the other hand, the melting point of the polyketone terpolymer was 220°C, and the intrinsic viscosity (LVN) measured on 1,1,1,3,3,3-HFIP was 1.4 dl/g.

95 wt% of the polyketone terpolymer prepared above and 5 wt% of thermoplastic high-impact ABS were blended to prepare a polyketone composition.

### Example 2

The same as in Example 1 except that 90 wt% of polyketone terpolymer and 10 wt% of ABS were used.

### Example 3

The same as in Example 1 except that 85 wt% of polyketone terpolymer and 15 wt% of ABS were used.

### Example 4

The same as in Example 1 except that 70 wt% of polyketone terpolymer and 30 wt% of ABS were used.

### Example 5

The same as in Example 1 except that 60 wt% of polyketone terpolymer and 40 wt% of ABS were used.

### Comparative Example 1

A specimen was prepared in the same manner as in Example 2, except that 90 wt% of PA6 of Rhodda Co. was used instead of polyketone.

### Property Evaluation

The polyketone compositions prepared in the above examples were prepared with 3 × 3 cm specimens, and the properties were evaluated in the following manner in comparison with the products of the comparative examples. The results are shown in Table 1 below.

### 1. Oil resistance: Oil absorption measurement of specimen after 48 hours and 96 hours after gasoline immersed at 50°C

**Table 1**

| | Example 1 | Example 2 | Example 3 | Example 4 | Example 5 | Comparative Example 1 |
|---|---|---|---|---|---|---|
| Composition | PK95%/ABS5% | PK90%/ABS10% | PK85%/ABS15% | PK70%/ABS30% | PK60%/ABS40% | PA90%/ABS10% |
| Oil absorption (After immersing for 48 hours) % | 0.11 | 0.10 | 0.13 | 0.12 | 0.13 | 0.20 |
| Oil absorption (After immersing for 96 hours) % | 0.14 | 0.13 | 0.17 | 0.19 | 0.20 | 0.28 |

As shown in Table 1, the oil absorption amount was measured to be lower than that of Comparative Example 1 under the same conditions in the example case. In Examples 1 to 5, the oil absorption was measured to be 0.15% or less after 48 hours of immersion in a 50°C gasoline solution. Particularly, in the case of Examples 2 and 3 (ABS content ratio of 8 to 20% by weight), it was evaluated that oil absorption was the most excellent.

Therefore, the polyketone composition prepared through the examples was more suitable to be used as thermoplastic plastics for industrial use, particularly fuel filler neck tubes because of excellent oil resistance.

### Example 6

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 11 times the molar ratio, and the two stages of the first stage at a polymerization temperature of 80°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.2 dl/g, the MI index was 60 g / 10 min and the MWD was 2.0. The polyketone terpolymer prepared above was molded into pellets on an extruder using a twin screw having a diameter of 40 mm and L/D = 32, which was operated at 250 rpm, and then injection molded to produce a specimen for industrial o-ring.

### Example 7

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min and the MWD was 2.0. The polyketone terpolymer prepared above was molded into pellets on an extruder using a twin screw having a diameter of 40 mm and L/D = 32, which was operated at 250 rpm, and then injection molded to produce a specimen for industrial o-ring.

### Example 8

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 9 times the molar ratio, and the two stages of the first stage at a polymerization temperature of 74°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.6 dl/g, the MI index was 60 g / 10 min and the MWD was 2.0. The polyketone terpolymer prepared above was molded into pellets on an extruder using a twin screw having a diameter of 40 mm and L/D = 32, which was operated at 250 rpm, and then injection molded to produce a specimen for industrial o-ring.

### Example 9

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min and the MWD was 1.8. The polyketone terpolymer prepared above was molded into pellets on an extruder using a twin screw having a diameter of 40 mm and L/D = 32, which was operated at 250 rpm, and then injection molded to produce a specimen for industrial o-ring.

### Example 10

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min and the MWD was 2.2. The polyketone terpolymer prepared above was molded into pellets on an extruder using a twin screw having a diameter of 40 mm and L/D = 32, which was operated at 250 rpm, and then injection molded to produce a specimen for industrial o-ring.

### Comparative Example 2

A polyether ether ketone resin was molded into pellets on an extruder using a twin screw having a diameter of 40 mm and L/D = 32, which was operated at 250 rpm, and then injection molded to produce a specimen for industrial o-ring.

### Property Evaluation

The physical properties of the specimens prepared in Examples 6 to 9 and Comparative Example 2 were evaluated by the following methods. The results are shown in Table 2 below.
1. Evaluation of Izod impact strength: Performed according to ASTM D256.
2. Evaluation of Oil Resistance Property maintenance rate: The specimens were immersed in engine oil maintained at standard conditions (25°C, 65% RH relative humidity, 24 hours) and at 50°C for 24 hours and then the impact strength was measured according to ASTM D256, and the average of the values measured five times in the vertical and horizontal directions per each treated sample was taken.
3. Abrasion resistance: The abrasion resistance is a value indicating the degree of abrasion. The larger the abrasion resistance, the smaller the abrasion resistance because wear occurs more easily. On the contrary, the smaller the value, the greater the abrasion resistance because the abrasion is not easily generated. The abrasion test was carried out in a pin-on-disk type under a load of 1 kg, a linear velocity of 7 Hz and a test time of 30 minutes.

**Table 2**

| | Example 6 | Example 7 | Example 8 | Example 9 | Example 10 | Comparative Example 2 |
|---|---|---|---|---|---|---|
| Properties | IV: 1.2 | IV: 1.4 | IV: 1.6 | IV: 1.4 | IV: 1.4 | PEEK |
| | MWD : 2.0 | MWD : 2.0 | MWD : 2.0 | MWD : 1.8 | MWD : 2.2 | |
| Abrasion (Rmax) | 0.60 | 0.70 | 0.75 | 0.82 | 0.85 | 8.10 |
| Impact Strength (kJ/ m²) | 25 | 20 | 22 | 26 | 23 | 18 |
| Product oil resistance (%,properties maintenance rate) | 85 | 86 | 87 | 89 | 90 | 75 |

As can be seen from the above Table 2, the impact strength and abrasion resistance of the examples were improved compared with the comparative examples and since the impact strength maintenance rate measured after immersing in the engine oil for 24 hours was 85% or more, it can be seen that the properties maintenance rate was excellent.

Accordingly, the industrial o-ring according to the present invention has excellent oil resistance and properties maintenance rate, and thus is suitable for application to hydraulic applications.

### Example 11

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 11 times the molar ratio, and the two stages of the first stage at a polymerization temperature of 80°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 2.2 dl/g, the MI index was 60 g / 10 min and the MWD was 2.0. The polyketone terpolymer prepared above was molded into pellets on an extruder using a twin screw having a diameter of 40 mm and L/D = 32, which was operated at 250 rpm, and then injection molded to produce a specimen for pipe liner.

### Example 12

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 2.4 dl/g, the MI index was 60 g / 10 min and the MWD was 2.0. The polyketone terpolymer prepared above was molded into pellets on an extruder using a twin screw having a diameter of 40 mm and L/D = 32, which was operated at 250 rpm, and then injection molded to produce a specimen for pipe liner.

### Example 13

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 9 times the molar ratio, and the two stages of the first stage at a polymerization temperature of 74°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 2.6 dl/g, the MI index was 60 g / 10 min and the MWD was 2.0. The polyketone terpolymer prepared above was molded into pellets on an extruder using a twin screw having a diameter of 40 mm and L/D = 32, which was operated at 250 rpm, and then injection molded to produce a specimen for pipe liner.

### Example 14

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 2.4 dl/g, the MI index was 60 g / 10 min and the MWD was 1.8. The polyketone terpolymer prepared above was molded into pellets on an extruder using a twin screw having a diameter of 40 mm and L/D = 32, which was operated at 250 rpm, and then injection molded to produce a specimen for pipe liner.

### Example 15

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 2.4 dl/g, the MI index was 60 g / 10 min and the MWD was 2.2. The polyketone terpolymer prepared above was molded into pellets on an extruder using a twin screw having a diameter of 40 mm and L/D = 32, which was operated at 250 rpm, and then injection molded to produce a specimen for pipe liner.

### Comparative Example 3

High density polyethylene resin was molded into pellets on an extruder using a twin screw having a diameter of 40 mm and L/D = 32, which was operated at 250 rpm, and then injection molded to produce a specimen for pipe liner.

### Property Evaluation

The physical properties of the specimens prepared in Examples 11 to 15 and Comparative Example 3 were evaluated by the following methods. The results are shown in Table 2 below.
1. Heat distortion temperature: Performed according to ASTM D648.
2. Evaluation of Izod impact strength: Performed according to ASTM D256.
3. Evaluation of Oil Resistance Property maintenance rate: The specimens were immersed in engine oil maintained at standard conditions (25°C, 65% RH relative humidity, 24 hours) and at 50°C for 24 hours and then the impact strength was measured according to ASTM D256, and the average of the values measured five times in the vertical and horizontal directions per each treated sample was taken.

**Table 3**

| | Example 11 | Example 12 | Example 13 | Example 14 | Example 15 | Comparative Example 3 |
|---|---|---|---|---|---|---|
| Properties | IV: 2.2 | IV: 2.4 | IV: 2.6 | IV: 2.4 | IV: 2.4 | HDPE |
| | MWD : 2.0 | MWD : 2.0 | MWD : 2.0 | MWD : 1.8 | MWD : 2.2 | |
| HDT (°C) | 105 | 105 | 105 | 105 | 105 | 46 |
| Impact Strength (kJ/ m²) | 20 | 22 | 24 | 21 | 22 | 4 |
| Product oil resistance (%, properties maintenance rate) | 85 | 86 | 88 | 89 | 90 | 75 |

As can be seen from the above Table 3, the impact strength of the examples were improved compared with the comparative examples and since the impact strength maintenance rate measured after immersing in the engine oil for 24 hours was 80% or more, it can be seen that the properties maintenance rate was excellent.

Accordingly, the pipe liner according to the present invention has excellent oil resistance and properties maintenance rate.

### Example 16

Linear alternating polyketone terpolymers of carbon monoxide and ethylene and propene are prepared in the presence of a catalyst composition formed from palladium acetate, trifluoroacetic acid and 1,3-bis[bis(2-methoxyphenyl- phosphino] propane. The molar ratio of ethylene to propene in the polyketone terpolymer prepared above was 85 : 15. The melting point of the polyketone terpolymer was 220°C, the LVN measured at 25°C by HFIP (hexa-fluoroisopropanol) was 1.3 dl/g, the MI index was 48 g / 10 min. The polyketone terpolymer prepared above was blended with 20% by weight of ABS resin containing 70% of butadiene to be molded into a pellet on an extruder using a twin screw having a diameter of 40 mm and L/D = 32, which was operated at 250 rpm.

### Comparative Example 4

Snow chains were manufactured using thermoplastic elastomer (TPE), which was previously used as a material for snow chains.

### Properties Evaluation

The prepared pellets of the above examples were injection-molded to prepare test specimens for snow chains. The test specimens were evaluated in the following manner in comparison with the products of the comparative examples, and the results are shown in Table 4 below.
1. Evaluation of Charpy Impact Strength: Performed according to ISO 179.
2. Evaluation of moisture absorptivity: Moisture content after 24 hours treatment at 50°C and 90% relative humidity
3. Evaluation of properties maintenance rate of calcium chloride resistance in product

The test specimens were repeatedly subjected to the following tests 20 times in 35% aqueous solution of calcium chloride, and tensile strength maintenance rate was measured
1) Removal of surface moisture after treatment at 100°C for 2 hours
2) Leave at room temperature for 30 minutes, cool
3) Treatment in a 35% aqueous solution of calcium chloride at 100 ° C for 2 hours
4) Leave at room temperature for 60 minutes, cool
5) Remove surface moisture after cleaning with water

The physical properties of Examples and Comparative Examples were as shown in Table 4 below.

**Table 4**

| | Unit | Example 16 | Comparative Example 4 |
|---|---|---|---|
| Resin composition | | Polyketone 80% | TPE |
| | | ABS 20% | |
| Charpy Impact Strength | (kJ/ m²) | 90 | 70 |
| Moisture absorption rate | (%) | 1.2 | 2.5 |
| Calcium chloride resistance (properties maintenance rate) | (%) | 90 | 60 |

As shown in Table 4, in Example 16, the Charpy impact strength was improved, the product moisture absorption rate was lower than that of Comparative Example 4, and the properties maintenance rate was as excellent as 90% even in the calcium chloride resistance of the product.

Therefore, the polyketone snow chain produced through Example 16 of the present invention is well suited for application as a snow chain having excellent impact resistance, moisture resistance and calcium chloride resistance.

### Example 17

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 11 times the molar ratio, and the two stages of the first stage at a polymerization temperature of 80°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.2 dl/g, the MI index was 60 g / 10 min and the MWD was 2.0. The polyketone terpolymer prepared above was molded into pellets on an extruder using a twin screw having a diameter of 40 mm and L/D = 32, which was operated at 250 rpm, and then injection molded to produce a specimen for wheel caps.

### Example 18

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min and the MWD was 2.0. The polyketone terpolymer prepared above was molded into pellets on an extruder using a twin screw having a diameter of 40 mm and L/D = 32, which was operated at 250 rpm, and then injection molded to produce a specimen for wheel caps.

### Example 19

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 9 times the molar ratio, and the two stages of the first stage at a polymerization temperature of 74°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.6 dl/g, the MI index was 60 g / 10 min and the MWD was 2.0. The polyketone terpolymer prepared above was molded into pellets on an extruder using a twin screw having a diameter of 40 mm and L/D = 32, which was operated at 250 rpm, and then injection molded to produce a specimen for wheel caps.

### Example 20

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min and the MWD was 1.8. The polyketone terpolymer prepared above was molded into pellets on an extruder using a twin screw having a diameter of 40 mm and L/D = 32, which was operated at 250 rpm, and then injection molded to produce a specimen for wheel caps.

### Example 21

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine).

In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g /10 min and the MWD was 2.2. The polyketone terpolymer prepared above was molded into pellets on an extruder using a twin screw having a diameter of 40 mm and L/D = 32, which was operated at 250 rpm, and then injection molded to produce a specimen for wheel caps.

### Comparative Example 5

The impact strength and the properties maintenance rate after moisture absorption of Polyamide 66 (PA66) were measured as a material of DuPont which was used as a wheel cap material.

### Properties Evaluation

The prepared pellets of the above examples were injection-molded to prepare specimens for wheel caps. The properties of the specimens were evaluated in the following manner in comparison with the products of the comparative examples, and the results are shown in Table 5 below.
1. Evaluation of Izod impact strength: Performed according to ASTM D256.
2. Evaluation of Moisture Absorption: Moisture content after 24 hours treatment at 50°C and relative humidity of 90%
3. Calcium chloride Izod impact strength maintenanace rate: A specimen prepared in accordance with ASTM D256 was immersed in water at 100°C for 2 hours, removed of the surface water, left at room temperature for 30 minutes, and then immersed in a 5% aqueous solution of calcium chloride and a 35% aqueous solution of calcium chloride at 100°C for 2 hours each and the surface water was removed after be left 1 hour at room temperature. One cycle is 5.5 hours long and the maintenance rate of the Izod impact strength per 5 cycles was evaluated. The maintenance rate evaluation was carried out for a total of 20 cycles.

The properties of Examples and Comparative Examples were as shown in Table 5 below.

**Table 5**

| | Example 17 | Example 18 | Example 19 | Example 20 | Example 21 | Comparative Example 5 |
|---|---|---|---|---|---|---|
| Properties of PK | IV: 1.2 | IV: 1.4 | IV: 1.6 | IV: 1.4 | IV: 1.4 | PA66 |
| | MWD : 2.0 | MWD : 2.0 | MWD : 2.0 | MWD : 1.8 | MWD : 2.2 | |
| Product moisture absorption rate (%, 50°C, 90% RH) | 0.5 | 0.45 | 0.51 | 0.57 | 0.59 | 2.5 |
| Product Calcium chloride resistance 5% (%, properties maintenance rate) | 90 | 91 | 89 | 88 | 87 | 50 |
| Product Calcium chloride resistance 35% (%,properties maintenance rate) | 85 | 86 | 84 | 83 | 82 | 43 |
| Impact Strength (kJ/ m²) | 20 | 21 | 22 | 21.4 | 20.8 | 5 |

As shown in Table 5, in the case of Examples, the notched impact strength was improved, the moisture absorptivity of the product was lower than that of Comparative Example, and it was evaluated that the physical properties of the product were maintained even in the calcium chloride resistance of the product.

Therefore, the polyketone wheel caps manufactured through the embodiments of the present invention are well suited for application as wheel caps with excellent impact resistance, water resistance, and chemical resistance properties. In the present invention, the impact strength of the wheel cap is 20 kJ/ m² or more, and the moisture absorption rate is 1.5% or less under the condition of the temperature 50°C and the relative humidity 90%.

### Example 22

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 11 times the molar ratio, and the two stages of the first stage at a polymerization temperature of 80°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.2 dl/g, the MI index was 60 g / 10 min and the MWD was 2.0.

100 parts by weight of the polyketone terpolymer prepared above and 30 parts by weight of glass fiber were put into a twin screw extruder of L/D32 and D40, and extruded through melt kneading at a temperature of 240°C and a screw rotation speed of 250 rpm.

### Example 23

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min and the MWD was 2.0.

100 parts by weight of the polyketone terpolymer prepared above and 30 parts by weight of glass fiber were put into a twin screw extruder of L/D32 and D40, and extruded through melt kneading at a temperature of 240°C and a screw rotation speed of 250 rpm.

### Example 24

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 9 times the molar ratio, and the two stages of the first stage at a polymerization temperature of 74°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.6 dl/g, the MI index was 60 g / 10 min and the MWD was 2.0.

100 parts by weight of the polyketone terpolymer prepared above and 30 parts by weight of glass fiber were put into a twin screw extruder of L/D32 and D40, and extruded through melt kneading at a temperature of 240°C and a screw rotation speed of 250 rpm.

### Example 25

100 parts by weight of the polyketone terpolymer prepared in Example 23 and 25 parts by weight of glass fiber were put into a twin screw extruder of L/D32 and D40, and extruded through melt kneading at a temperature of 240°C and a screw rotation speed of 250 rpm.

### Example 26

100 parts by weight of the polyketone terpolymer prepared in Example 23 and 35 parts by weight of glass fiber were put into a twin screw extruder of L/D32 and D40, and extruded through melt kneading at a temperature of 240°C and a screw rotation speed of 250 rpm.

### Comparative Example 6

PA66 Glass Fiber 33% and A218V30 product of Rhodda Co. were used.

### Properties Evaluation

The prepared pellets of the above-mentioned example were injection-molded to produce an engine cylinder block bracket specimen, which is a kind of engine parts. The properties of the engine cylinder block bracket specimens were evaluated in the following manner in comparison with the products of the comparative examples.
1. Tensile strength evaluation: Performed according to ASTM D638.
2. Properties after moisture absorption (tensile properties) maintenance rate evaluation
   1) Treatment at 50°C and 90% relative humidity for 24 hours
   2) Tensile properties evaluation: tensile strength measurement according to ASTM D638
   3) Calculate the maintenance rate from physical properties immediately after injection
3. Oil resistance: Measurement of tensile strength maintenance rate after gasoline 50°C immersion for 48 hours
4. Heat resistance : The heat distortion temperature was measured according to ASTM D648.

**Table 6**

| Item | Example 22 | Example 23 | Example 24 | Example 25 | Example 26 | Comparative Example 6 |
|---|---|---|---|---|---|---|
| tensile strength (MPa) | 158 | 160 | 162 | 157 | 170 | 200 |
| Water resistance (Immersion properties maintenance rate, %) | 89 | 90 | 87 | 91 | 85 | 50 |
| Oil resistance (Immersion properties maintenance rate, %) | 85 | 90 | 86 | 88 | 89 | 70 |
| Heat resistance (°C) | 218 | 222 | 223 | 220 | 219 | 260 |

As shown in Table 6, the heat resistance and tensile strength values of Examples are somewhat lower than those of Comparative Example 6, but they are generally within the range suitable for use as engine parts. Water resistance and oil resistance found to be excellent compared to those of Comparative Example. In particular, tensile strength maintenance rate when immersed in water and engine oil for 24 hours, respectively, is more than 80%, which is excellent.

Thus, the specimens prepared through the examples were found to be more advantageous for use as engine parts than the comparative examples.

### Example 27

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min and the MWD was 2.0. 70 wt% of the polyketone terpolymer prepared above and 30 wt% of glass fiber were manufactured into pellets on an extruder using a twin screw having a diameter of 40 mm and L/D = 32, which was operated at 250 rpm, and then injection molded to produce a specimen for automotive valve body and the physical properties were evaluated.

### Example 28

The same as Example 1 except that the content of the polyketone in Example 27 was set to 60% by weight and the content of the glass fiber was set to 40% by weight.

### Example 29

The same as Example 1 except that the content of the polyketone in Example 27 was set to 50% by weight and the content of the glass fiber was set to 50% by weight.

### Comparative Example 7 to 8

The impact strength and the properties maintenance rate after moisture absorption of a polyamide 6 (PA 6) of 50 wt%, a glass fiber of 50 wt%, and a polyamide 66 (PA 66) of 37 wt% and a glass fiber of 63 wt% which are materials of DuPont were measured.

### Properties Evaluation

The prepared pellets of the above examples were injection-molded to prepare test specimens for automobile valve bodies. Properties of the specimens were evaluated in the following manner in comparison with the products of the comparative examples, and the results are shown in Table 1 below.
1. Evaluation of Izod impact strength: Performed according to ASTM D256.
2. Oil resistance: Oil absorption measurement after immersing in 50°C oil, for 48 hours and 96 hours
3. Tensile strength: Performed according to ASTM D638.
4. Flexural strength: Performed according to ASTM D790.
5. Evaluation of product properties maintenance rate of calcium chloride resistance

The test specimens were repeatedly subjected to the following tests 20 times in 35% aqueous solution of calcium chloride, and tensile strength maintenance rate was measured
1) Removal of surface moisture after treatment at 100°C for 2 hours
2) Leave at room temperature for 30 minutes, cool
3) Treatment in a 35% aqueous solution of calcium chloride at 100°C for 2 hours
4) Leave at room temperature for 60 minutes, cool
5) Remove surface moisture after cleaning with water

The physical properties of the examples and comparative examples were as shown in Table 7 below.

**Table 7**

| Division | Mixing ratio | Oil absorption (after 48 hours) | Oil absorption (after 96 hours) | tensile strength | Flexural strength | Impact strength | calcium chloride resistance (properties maintenance rate) |
|---|---|---|---|---|---|---|---|
| | | % | % | MPa | MPa | KJ/m² | % |
| Comparative Example 7 | PA6/GF50 | 0.15 | 0.18 | 39 | 43 | 30 | 60 |
| Comparative Example 8 | PA66/GF63 | 0.16 | 0.20 | 36 | 46 | 25 | 65 |
| Example 27 | PK/GF30 | 0.10 | 0.13 | 90 | 85 | 50 | 90 |
| Example 28 | PK/GF40 | 0.11 | 0.14 | 77 | 88 | 52 | 92 |
| Example 29 | PK/GF50 | 0.11 | 0.16 | 73 | 87 | 59 | 88 |

As shown in Table 7, the examples prepared by blending polyketone and glass fiber have excellent oil resistance due to low oil absorption after 48 hours or 96 hours compared with the comparative example (oil absorption after 50 hours of gasoline immersion in gasoline at 50°C is 0.14% or less), and it was evaluated that the impact resistance was high so the impact resistance was excellent. Therefore, the automobile valve body manufactured through the example of the present invention has excellent impact resistance and oil resistance, and thus is well suited for application as an automobile valve body.

### Example 30

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 48 g / 10 min. A blend consisting of 95 wt% of the polyketone terpolymer prepared above and 5 wt% of Sulfamide type plasticizer were manufactured into pellets on an extruder using a twin screw having a diameter of 2.5 cm and L/D = 32, which was operated at 250 rpm, and then injection molded to produce a specimen for fuel tube for automobile.

### Comparative Example 9

Nylon 12 instead of polyketone terpolymer were manufactured into pellets on an extruder using a twin screw having a diameter of 2.5 cm and L/D = 32, which was operated at 250 rpm, and then injection molded to produce a specimen for fuel tube for automobile.

### Properties Evaluation

The properties of the specimens for automobile fuel tubes prepared in Example 30 and Comparative Example 9 were evaluated by the following methods, and the results are shown in Table 8 below.
1. Permeation Coefficient: It was conducted according to ASTM D1434 under conditions of 23°C and 50% RH.
2. Properties maintenance rate: The flexural strength of the specimen after immersion in gasoline at 25°C and after immersion in gasoline at 60°C for 3000 hours was measured according to ASTM D790, respectively.
3. Weight change rate: The weight after immersing the specimen in gasoline at 25°C and after immersing in gasoline at 60°C for 3000 hours was measured according to MS211-47, respectively.

**Table 8**

| | Example 30 | Comparative Example 9 |
|---|---|---|
| Permeation Coefficient (@ 23°C, 50% RH (g.mm/ m2.day) | 0.005 | 0.067 |
| Properties maintenance rate (%) | 98 | 78 |
| Weight change rate (%) | 0.4 | 4.2 |

According to Table 8, Example 30 exhibits excellent fuel barrier properties compared to Comparative Example 9 (less than 0.005 g.mm/m'.day), and properties maintenance rate (more than 98%) and weight change rate were also excellent.

Therefore, the specimen produced by Example 30 of the present invention is suitable for use as a fuel tube for automobile.

### Example 31

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min and the MWD was 2.0. 75 wt% of the polyketone terpolymer prepared above, 10 wt% of glass fiber and 15 wt% of a mineral filler mixed with 60 to 75 wt% of silica and 25 to 40 wt% of magnesium oxide were manufactured into pellets on an extruder using a twin screw having a diameter of 40 mm and L/D = 32, which was operated at 250 rpm, and then injection molded to produce a specimen for engine cover for automobile.

### Example 32

The same as Example 31 except that the content of the glass fiber is 5% by weight and the content of the mineral filler is 10% by weight.

### Example 33

The same as Example 31 except that the content of the glass fiber is 20% by weight and the content of the mineral filler is 20% by weight.

### Example 32

The same as Example 31 except that the use of polyamide 6 which is a material of DuPont instead of polyketone.

### Properties Evaluation

The prepared pellets of the above Examples were injection-molded to prepare automotive engine cover specimens. The specimens were evaluated in the following manner in comparison with the products of the comparative examples, and the results are shown in Table 9 below.
1. Evaluation of Izod impact strength: Performed according to ASTM D256.
2. Assessment of strain under oil environment: After immersion in oil for 500 hours at room temperature, the vertical and horizontal directions were evaluated according to MS211-47.
3. Tensile strength: Performed according to ASTM D638.
4. Flexural strength: Performed according to ASTM D790.

The physical properties of the examples and comparative examples are shown in Table 9 below.

**Table 9**

| Division | Evaluation of rate of change in vertical direction under oil environment | Evaluation of rate of change in horizontal direction under oil environment | Tensile strength | Flexural strength | Impact strength |
|---|---|---|---|---|---|
| | % | % | MPa | MPa | kJ/m² |
| Comparative Example 10 | 0.180 | 0.210 | 39 | 43 | 30 |
| Example 31 | 0.152 | 0.170 | 77 | 88 | 52 |
| Example 32 | 0.154 | 0.178 | 90 | 85 | 50 |
| Example 33 | 0.153 | 0.174 | 73 | 87 | 59 |

In Table 9, the polyketone resin composition prepared according to the present invention is superior to conventional polyamide materials in terms of mechanical properties and oil resistance, and thus it is found that the polyketone resin composition is suitable for use as a material for automobile engine covers.

In particular, when the automobile engine cover of the present invention contains 5 to 30% by weight of the glass fiber as compared with the entire blend, the dimensional change ratio is small in the oil environment and the oil resistance is good. It is suitable to be applied to automobile oil pan which is likely to be exposed to oil. When the content of the glass fiber is less than 5% by weight, the oil resistance and the mechanical properties are poor, and when it exceeds 30% by weight, blending and injection molding are difficult. In addition, the mineral filler is preferably 10 to 20 wt% based on the total blend for the same reason as described above.

### Example 34

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min and the MWD was 2.0. The polyketone terpolymer prepared above was molded into pellets on an extruder using a twin screw having a diameter of 2.5 cm and L/D = 32, which was operated at 250 rpm.

### Example 35

100 wt% of the polyketone terpolymer prepared same as Example 34 was blended with 10 wt% of ABS and was molded into pellets on an extruder using a twin screw having a diameter of 2.5 cm and L/D = 32, which was operated at 250 rpm.

### Example 36

100 wt% of the polyketone terpolymer prepared same as Example 34 was blended with 30 wt% of glass fiber and was molded into pellets on an extruder using a twin screw having a diameter of 2.5 cm and L/D = 32, which was operated at 250 rpm.

### Example 37

100 wt% of the polyketone terpolymer prepared same as Example 34 was blended with 10 wt% of sulfamide type plasticizer and was molded into pellets on an extruder using a twin screw having a diameter of 2.5 cm and L/D = 32, which was operated at 250 rpm.

### Example 38

100 wt% of the polyketone terpolymer prepared same as Example 34 was blended with 10 wt% of a mineral filler prepared by mixing 60 wt% of silica and 40 wt% of magnesium oxide and was molded into pellets on an extruder using a twin screw having a diameter of 2.5 cm and L/D = 32, which was operated at 250 rpm.

### Comparative Example 11

PA66 of Rhodda Co. was molded into pellets on an extruder using a twin screw having a diameter of 2.5 cm and L/D = 32, which was operated at 250 rpm.

### Comparative Example 12

100 wt% of PA66 of Rhodda Co. was blended with 10 wt% of ABS and was molded into pellets on an extruder using a twin screw having a diameter of 2.5 cm and L/D = 32, which was operated at 250 rpm.

### Comparative Example 13

100 wt% of PA66 of Rhodda Co. was blended with 30 wt% of glass fiber and was molded into pellets on an extruder using a twin screw having a diameter of 2.5 cm and L/D = 32, which was operated at 250 rpm.

### Comparative Example 14

100 wt% of PA66 of Rhodda Co. was blended with 10 wt% of sulfamide type plasticizer and was molded into pellets on an extruder using a twin screw having a diameter of 2.5 cm and L/D = 32, which was operated at 250 rpm.

### Comparative Example 15

100 wt% of PA66 of Rhodda Co. was blended with 10 wt% of a mineral filler prepared by mixing 60 wt% of silica and 40 wt% of magnesium oxide and was molded into pellets on an extruder using a twin screw having a diameter of 2.5 cm and L/D = 32, which was operated at 250 rpm.

### Properties Evaluation

The prepared polyketone resin compositions of the above examples were prepared as test pieces, and the properties were evaluated in the following manner in comparison with the products of the comparative examples. The results are shown in Table 10 below.
1. Assessment of strain under oil environment: After immersion in oil for 500 hours at room temperature, the vertical and horizontal directions were evaluated according to MS211-47.
2. Assessment of calcium chloride resistance: The maintenance rate of Izod impact strength per 5 cycles was evaluated by taking one cycle as a total of 5.5 hours in which the sample was immersed in a 35% aqueous solution of calcium chloride at 100°C for 2 hours, then taken out and left at room temperature for 1 hour and then removing surface water. The maintenance rate evaluation was carried out for a total of 20 cycles.
3. Evaluation of abrasion resistance: Cylindrical specimens having an inner diameter of 20 mm, an outer diameter of 25 mm and a height of 15 mm were evaluated using a counter material. The abrasion loss was measured at a speed of 50 rpm under a JIS K7218 standard, a load of 150 N, and a wear distance of 3 km.
4. Evaluation of Izod impact strength: Performed according to ASTM D256.

**Table 10**

| Division | Vertical direction change rate under oil environment (%) | Horizontal direction change rate under oil environment (%) | calcium chloride resistance (%) | abrasion resistance (g) | Izod impact strength (kJ/ m²) |
|---|---|---|---|---|---|
| Example 34 | 0.152 | 0.170 | 90 | 0.018 | 52 |
| Example 35 | 0.154 | 0.184 | 88 | 0.018 | 54 |
| Example 36 | 0.148 | 0.182 | 92 | 0.016 | 52 |
| Example 37 | 0.144 | 0.188 | 92 | 0.017 | 56 |
| Example 38 | 0.150 | 0.186 | 94 | 0.019 | 54 |
| Comparative Example 11 | 0.180 | 0.240 | 60 | 0.083 | 30 |
| Comparative Example 12 | 0.182 | 0.244 | 58 | 0.088 | 28 |
| Comparative Example 13 | 0.184 | 0.260 | 55 | 0.090 | 32 |
| Comparative Example 14 | 0.184 | 0.264 | 56 | 0.092 | 31 |
| Comparative Example 15 | 0.220 | 0.262 | 60 | 0.090 | 34 |

As shown in Table 10, the polyketone terpolymer and the polyketone resin composition of the present invention are superior to PA66 in oil resistance, calcium chloride resistance, abrasion resistance and impact strength, and It is very suitable for use in industrial o-rings, pipe liners, snow chains, an engine cover or the like.

### Example 39

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. In the polyketone terpolymer prepared above, carbon monoxide was 50 mol%, ethylene was 46 mol%, and propylene was 4 mol%. The melting point of the polyketone terpolymer was 220°C, the LVN measured at 25°C by HFIP (hexa-fluoroisopropanol) was 1.4 dl/g, and the MWD was 2.0.

A composition was manufactured by mixing 70 wt% of the polyketone terpolymer prepared above and 30 wt% of glass fiber and was manufactured into pellets on an extruder using a twin screw having a diameter of 40 cm and L/D = 32, which was operated at 250 rpm, and then injection molded to produce a specimen for cylinder head cover.

### Example 40

A composition was manufactured by mixing 75 wt% of the polyketone terpolymer prepared same as Example 39 and 25 wt% of glass fiber and was manufactured into pellets on an extruder using a twin screw having a diameter of 40 cm and L/D = 32, which was operated at 250 rpm, and then injection molded to produce a specimen for cylinder head cover.

### Example 41

A composition was manufactured by mixing 80 wt% of the polyketone terpolymer prepared same as Example 39 and 20 wt% of glass fiber and was manufactured into pellets on an extruder using a twin screw having a diameter of 40 cm and L/D = 32, which was operated at 250 rpm, and then injection molded to produce a specimen for cylinder head cover.

### Example 40

A composition was manufactured by mixing 85 wt% of the polyketone terpolymer prepared same as Example 39 and 15 wt% of glass fiber and was manufactured into pellets on an extruder using a twin screw having a diameter of 40 cm and L/D = 32, which was operated at 250 rpm, and then injection molded to produce a specimen for cylinder head cover.

### Comparative Example 15

A composition was manufactured by mixing 70 wt% of Nylon 66 resin and 30 wt% of glass fiber and was manufactured into pellets on an extruder using a twin screw having a diameter of 40 cm and L/D = 32, which was operated at 250 rpm, and then injection molded to produce a specimen for cylinder head cover.

### Properties Evaluation

The properties of the specimens prepared in Examples 39 to 42 and Comparative Example 15 were evaluated in the following manner. The results are shown in Table 11 below.
1. Evaluation of Izod impact strength: Performed according to ASTM D256.
2. Evaluation of dimensional change rate: Evaluation was made according to MS211-47 for vertical and horizontal directions at a temperature of 50°C and a relative humidity of 90%.
3. Oil resistance: Tensile strength maintenance rate after 48 hours of gasoline immersion at 50°C was measured.

**Table 11**

| Division | Oil resistance | Impact Strength | dimensional change rate |
|---|---|---|---|
| | % | kJ/m² | % |
| Example 39 | 85 | 25 | 1.3 |
| Example 40 | 90 | 23 | 1.1 |
| Example 41 | 86 | 28 | 1.2 |
| Example 42 | 88 | 27 | 1.5 |
| Comparative Example 15 | 70 | 18 | 5.2 |

As can be seen from the above Table 11, the examples showed excellent dimensional stability, impact resistance and oil resistance as compared with Comparative Example 15. Therefore, the cylinder head cover manufactured through the Example of the present invention exhibits better dimensional stability, impact resistance and oil resistance than the comparative example used as the conventional cylinder head cover material, and thus is more suitable for application as a cylinder head cover.

### Example 43

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. In the polyketone terpolymer prepared above, carbon monoxide was 50 mol%, ethylene was 46 mol%, and propylene was 4 mol%. The melting point of the polyketone terpolymer was 220°C, the LVN measured at 25°C by HFIP (hexa-fluoroisopropanol) was 1.4 dl/g, and the MWD was 2.0.

A composition was manufactured by mixing 70 wt% of the polyketone terpolymer prepared above and 25 wt% of glass fiber and was manufactured into pellets on an extruder using a twin screw having a diameter of 40 cm and L/D = 32, which was operated at 250 rpm, and then injection molded to produce a specimen for power steering oil reservoir tank.

### Example 44

A composition was manufactured by mixing 75 wt% of the polyketone terpolymer prepared same as Example 43 and 25 wt% of glass fiber and was manufactured into pellets on an extruder using a twin screw having a diameter of 40 cm and L/D = 32, which was operated at 250 rpm, and then injection molded to produce a specimen for power steering oil reservoir tank.

### Example 45

A composition was manufactured by mixing 80 wt% of the polyketone terpolymer prepared same as Example 43 and 20 wt% of glass fiber and was manufactured into pellets on an extruder using a twin screw having a diameter of 40 cm and L/D = 32, which was operated at 250 rpm, and then injection molded to produce a specimen for power steering oil reservoir tank.

### Example 46

A composition was manufactured by mixing 85 wt% of the polyketone terpolymer prepared same as Example 43 and 15 wt% of glass fiber and was manufactured into pellets on an extruder using a twin screw having a diameter of 40 cm and L/D = 32, which was operated at 250 rpm, and then injection molded to produce a specimen for power steering oil reservoir tank.

### Comparative Example 16

A composition was manufactured by mixing 70 wt% of Nylon 66 resin and 30 wt% of glass fiber and was manufactured into pellets on an extruder using a twin screw having a diameter of 40 cm and L/D = 32, which was operated at 250 rpm, and then injection molded to produce a specimen for power steering oil reservoir tank.

### Properties Evaluation

The properties of the specimens prepared in Examples 43 to 46 and Comparative Example 16 were evaluated by the following methods. The results are shown in Table 12 below.
1) Evaluation of oil resistance: Tensile strength maintenance rate after 48 hours of gasoline immersion at 50°C was measured.
2) Evaluation of properties maintenance rate of calcium chloride resistance:
   (1) immersing the prepared specimen in water at 100°C for 2 hours;
   (2) cooling the immersed specimen at room temperature (RT) for 30 minutes;
   (3) immersing the cooled specimen in a 35% calcium chloride solution at 100°C for 2 hours;
   (4) cooling the immersed specimen at room temperature (RT) for 60 minutes;

After the above steps (1) to (4) are repeated 20 times, the properties maintenance rate is measured.

**Table 12**

| Division | Oil resistance (properties maintenance rate) | calcium chloride resistance (properties maintenance rate) |
|---|---|---|
| | % | % |
| Example 43 | 86 | 90 |
| Example 44 | 90 | 93 |
| Example 45 | 86 | 85 |
| Example 46 | 88 | 86 |
| Comparative Example 16 | 70 | 70 |

As can be seen from Table 12, the examples showed excellent chemical resistance as compared with Comparative Example 16. Therefore, the power steering oil reservoir tank manufactured through the Example of the present invention is more suitable for application as a power steering oil reservoir tank because it exhibits better chemical resistance than the comparative example used as a conventional power steering oil reservoir tank material.

### Example 47

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 11 times the molar ratio, and the two stages of the first stage at a polymerization temperature of 80°C and the second stage at 84°C are carried out. The molar ratio of ethylene to propene in the polyketone terpolymer prepared above was 85 : 15. The melting point of the polyketone terpolymer was 220°C, the LVN measured at 25°C by HFIP (hexa-fluoroisopropanol) was 1.4 dl/g, the MI index was 60 g / 10 min and the MWD was 2.0. The polyketone terpolymer prepared above was molded into pellets on an extruder using a twin screw having a diameter of 2.5 cm and L/D = 32, which was operated at 250 rpm. The prepared test specimens were injection - molded on a molding machine with a mold clamping force of 80 tons to prepare fuel pump specimens.

### Example 48

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 85 : 15. The melting point of the polyketone terpolymer was 220°C, the LVN measured at 25°C by HFIP (hexa-fluoroisopropanol) was 1.6 dl/g, the MI index was 60 g / 10 min and the MWD was 2.0. The polyketone terpolymer prepared above was molded into pellets on an extruder using a twin screw having a diameter of 2.5 cm and L/D = 32, which was operated at 250 rpm. The prepared test specimens were injection - molded on a molding machine with a mold clamping force of 80 tons to prepare fuel pump specimens.

### Example 49

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 9 times the molar ratio, and the two stages of the first stage at a polymerization temperature of 74°C and the second stage at 84°C are carried out. The molar ratio of ethylene to propene in the polyketone terpolymer prepared above was 85 : 15. The melting point of the polyketone terpolymer was 220°C, the LVN measured at 25°C by HFIP (hexa-fluoroisopropanol) was 2.0 dl/g, the MI index was 60 g / 10 min and the MWD was 2.0. The polyketone terpolymer prepared above was molded into pellets on an extruder using a twin screw having a diameter of 2.5 cm and L/D = 32, which was operated at 250 rpm. The prepared test specimens were injection - molded on a molding machine with a mold clamping force of 80 tons to prepare fuel pump specimens.

### Comparative Example 17

Polyoxymethylene resin was molded into pellets on an extruder using a twin screw having a diameter of 2.5 cm and L/D = 32, which was operated at 250 rpm to prepare fuel pump specimens.

### Properties Evaluation

1. Evaluation of Dimensional Stability and Impact Resistance: The fuel pump manufactured in the above Examples and Comparative Examples were evaluated for dimensional stability, formability and oil resistance through the following methods. The results are shown in Table 4 below.
   1) Dimensional stability evaluation: The strain rate of the product was evaluated according to MS211-47 for vertical and horizontal directions at a temperature of 50°C and a relative humidity of 90%.
   2) Formability evaluation: Evaluation was made by the number of articles to be injected into a fixed article per unit time in the same mold. Excellent when it is possible to inject more than the standard, and Insufficient if it can inject fewer than the standard.
   3) Evaluation of oil resistance: The tensile strength maintenance rate after 48 hours of gasoline immersion at 50°C was measured.3) Evaluation of oil resistance: The tensile strength maintenance rate after 48 hours of gasoline immersion at 50°C was measured.

**Table 13**

| Item | Example 47 | Example 48 | Example 49 | Comparative Example 17 |
|---|---|---|---|---|
| strain rate of the product - Vertical (50°C, RH 90%) | 0.12 | 0.14 | 0.10 | 0.25 |
| strain rate of the product - Horizontal (50°C, RH 90%) | 0.04 | 0.03 | 0.05 | 0.12 |
| Oil resistance (%) | 85 | 90 | 86 | 70 |
| Formability | Good | Good | Good | normal |

As can be seen from Table 13, the oil resistance and moldability of the Examples were improved and the product deformation rates in the vertical and horizontal directions were superior to those of the Comparative Examples. Therefore, the fuel pump for a vehicle manufactured through the Example of the present invention is more suitable for application as a fuel pump for a vehicle because it exhibits superior oil resistance, formability and dimensional stability as compared with the comparative example used as a conventional fuel pump material for a vehicle.

## Claims

1. A polyketone copolymer having excellent oil resistance comprising repeating units represented by the following general formulas (1) and (2) of which intrinsic viscosity is from 1.0 to 2.0 dl/g and molecular weight distribution is from 1.5 to 2.5
-[-CH₂CH₂-CO]x- (1)
-[-CH₂-CH(CH₃)-CO]y- (2)
wherein x,y represents the mole % of each of general formulas (1) and (2) in the copolymer, and y/x of the general formulas (1) and (2) is from 0.03 to 0.3, and
wherein a ligand of catalyst composition used in polymerization of the polyketone copolymer is ((2,2-dimethyl-1,3-dioxane-5,5-diyl)bis(methylene))bis(bis(2-methoxyphenyl)-phosphine).

2. The polyketone copolymer according to claim 1, **characterized in that** the remaining amount of palladium catalyst of the polyketone copolymer is from 5 to 50 ppm.

3. A component selected from the group consisting of industrial o-ring and pipe liner, produced by using the polyketone copolymer according to any one of claims 1 or 2.

4. A component selected from the group consisting of wheel cap and polyketone fuel pump for automobile produced by using the polyketone copolymer according to any one of claims 1 to 3.

5. The component according to any one of claims 3 to 4, **characterized in that** the impact strength of the component measured in engine oil immersion at 50°C for 24 hours is maintained in more 85% compared to the impact strength at 25°C, relative humidity 65%, and moisture absorption rate of the component measured at 50°C, relative humidity 90% is not more than 1.5%.

6. A polyketone resin composition **characterized in that** it is produced by injection molding a blend comprising:
a polyketone copolymer of carbon monoxide and at least one olefin, of which intrinsic viscosity is from 1.0 to 2.0 dl/g and molecular weight distribution is from 1.5 to 2.5; and
one or two more additive material(s) selected from the group consisting of glass fibers, acrylonitrile butadiene styrene (ABS), sulfonamide-based plasticizers and a mineral filler,
and a ligand of catalyst composition used in polymerization of the polyketone copolymer is ((2,2-dimethyl-1,3-dioxane-5,5-diyl)bis(methylene))bis(bis(2-methoxyphenyl)phosphine).

7. The polyketone resin composition according to claim 6, **characterized in that** the mineral filler comprises one filler selected from the group consisting of talc, kaolin, mica, magnesium oxide and calcium carbonate.

8. A component selected from the group consisting of industrial o-ring and pipe liner produced by using the polyketone resin composition according to any one of claims 6 or 7.

9. A component selected from the snow chain produced by using the polyketone resin composition according to any one of claims 6 or 7.

10. A component selected from the group consisting of fuel tube for automobile, engine cover for automobile, fuel filler neck tube, engine component, engine cylinder block bracket, the air intake manifold for engine, the canister, transmission fluid storage tank, valve body for automobile, cylinder head cover, power steering reservoir tank and fuel pump produced by using the polyketone resin composition according to any one of claims 6 or 7.

11. The component according to any one of claims 8 to 10, **characterized in that** each maintenance rate of tensile strength of the component after immersion in each water and engine oil for 24 hours is each more than 80% and moisture absorption rate of the component measured at 50°C, relative humidity 90% is not more than 1.5%.

## Patentansprüche

1. Ein Polyketon-Copolymer mit hervorragender Ölbeständigkeit, welches Wiederholungseinheiten umfasst, die durch die folgenden allgemeinen Formeln (1), (2) repräsentiert werden, und dessen intrinsische Viskosität 1,0 bis 2,0 dl/g beträgt und dessen Molekulargewichtsverteilung 1,5 bis 2,5 ist
-[-CH₂CH₂-CO]x- (1)
-[-CH₂-CH(CH₃)-CO]y- (2),
wobei x,y die Mol-% einer jeden der allgemeinen Formeln (1) und (2) in dem Copolymer repräsentieren, and y/x der allgemeinen Formeln (1) und (2) 0,03 bis 0,3 ist, und
wobei ein Ligand der Katalysatorzusammensetzung, die zur Polymerisation des Polyketon-Copolymers eingesetzt wurde, ((2,2-Dimethyl-1,3-dioxan-5,5-diyl)bis(methylen))bis(bis(2-methoxyphenyl)phosphin) ist.

2. Polyketon-Copolymer nach Anspruch 1, **dadurch gekennzeichnet, dass** die verbleibende Menge an Palladium-Katalysator des Polyketon-Copolymers 5 bis 50 ppm beträgt.

3. Eine Komponente, welche aus der Gruppe ausgewählt ist, die aus einem industriellen O-Ring und einer Rohrauskleidung besteht, und unter Verwendung des Polyketon-Copolymers nach irgendeinem der Ansprüche 1 oder 2 hergestellt ist.

4. Eine Komponente, welche aus der Gruppe ausgewählt ist, die aus einer Radkappe und einer Polyketon-Kraftstoffpumpe für Automobile besteht, und unter Verwendung des Polyketon-Copolymers nach irgendeinem der Ansprüche 1 bis 3 hergestellt ist.

5. Komponente nach irgendeinem der Ansprüche 3 bis 4, **dadurch gekennzeichnet, dass** die Zugfestigkeit der Komponente, gemessen nach Eintauchen in Maschinenöl bei 50°C für 24 Stunden, zu mehr als 85 %, im Vergleich zur Zugfestigkeit bei 25°C und einer relativen Luftfeuchtigkeit von 65 %, erhalten bleibt und die Feuchtigkeitsabsorptionsrate der Komponente, gemessen bei 50°C und einer relativen Luftfeuchtigkeit von 90 %, nicht mehr als 1,5 % beträgt.

6. Eine Polyketon-Harzzusammensetzung, **dadurch gekennzeichnet, dass** sie hergestellt ist durch Spritzgießen einer Mischung, welche umfasst:
ein Polyketon-Copolymer von Kohlenmonoxid und mindestens einem Olefin, dessen intrinsische Viskosität 1,0 bis 2,0 dl/g beträgt und dessen Molekulargewichtsverteilung 1,5 bis 2,5 ist; und
ein oder zwei weitere(s) Zusatzmaterial(ien), ausgewählt aus der Gruppe, die aus Glasfasern, Acrylnitril-Butadien-Styrol (ABS), Weichmachern auf Sulfonamidbasis und einem mineralischen Füllstoff besteht,
und wobei ein Ligand der Katalysatorzusammensetzung, die zur Polymerisation des Polyketon-Copolymers eingesetzt wurde, ((2,2-Dimethyl-1,3-dioxan-5,5-diyl)bis-(methylen))bis(bis(2-methoxyphenyl)phosphin) ist.

7. Polyketon-Harzzusammensetzung nach Anspruch 6, **dadurch gekennzeichnet, dass** der mineralische Füllstoff einen Füllstoff umfasst, welcher aus der Gruppe bestehend aus Talk, Kaolin, Mica, Magnesiumoxid und Calciumcarbonat ausgewählt ist.

8. Eine Komponente, welche aus der Gruppe ausgewählt ist, die aus einem industriellen O-Ring und einer Rohrauskleidung besteht, und unter Verwendung der Polyketon-Harzzusammensetzung nach irgendeinem der Ansprüche 6 oder 7 hergestellt ist.

9. Eine Komponente, welche aus der Schneekette ausgewählt ist, die unter Verwendung der Polyketon-Harzzusammensetzung nach irgendeinem der Ansprüche 6 oder 7 hergestellt ist.

10. Eine Komponente, welche aus der Gruppe ausgewählt ist, die aus einem Automobil-Kraftstoffschlauch, einer Automobil-Motorabdeckung, einem Kraftstoff-Einfüllstutzen, einer Motorkomponente, Motorzylinderblockhalterung, einem Luftansaugrohr für einen Motor, Kanister, Vorratsbehälter für Getriebeflüssigkeit, Automobil-Ventilkörper, Zylinderkopfabdeckung, Servolenkung-Vorratsbehälter und Kraftstoffpumpe besteht, und unter Verwendung der Polyketon-Harzzusammensetzung nach irgendeinem der Ansprüche 6 oder 7 hergestellt ist.

11. Komponente nach irgendeinem der Ansprüche 8 bis 10, **dadurch gekennzeichnet, dass** die Aufrechterhaltungsrate der Zugfestigkeit der Komponente nach Eintauchen in jedes von Wasser und Maschinenöl für 24 Stunden jeweils mehr als 80 % beträgt und die Feuchtigkeitsabsorptionsrate der Komponente, gemessen bei 50°C und einer relativen Luftfeuchtigkeit von 90 %, nicht mehr als 1,5 % beträgt.

## Revendications

1. Copolymère de polycétone présentant une excellente résistance à l'huile comprenant des motifs répétitifs représentés par les formules générales (1) et (2) suivantes dont la viscosité intrinsèque est de 1,0 à 2,0 dl/g et la répartition du poids moléculaire est de 1,5 à 2,5
-[-CH₂CH₂-CO]x- (1)
-[-CH₂-CH(CH₃)-CO]y- (2)
dans lesquelles x, y représentent le % molaire de chacune des formules générales (1) et (2) dans le copolymère, et y/x des formules générales (1) et (2) est de 0,03 à 0,3, et
dans lequel un ligand de composition de catalyseur utilisé dans une polymérisation du copolymère de polycétone est la ((2,2-diméthyl-1,3-dioxane-5,5-diyl)-bis(méthylène))bis(bis(2-méthoxyphényl)phosphine).

2. Copolymère de polycétone selon la revendication 1, **caractérisé en ce que** la quantité restante de catalyseur au palladium du copolymère de polycétone est de 5 à 50 ppm.

3. Composant sélectionné dans le groupe consistant en un joint torique industriel et un revêtement de tuyau, produits par l'utilisation du copolymère de polycétone selon l'une quelconque des revendications 1 ou 2.

4. Composant sélectionné dans le groupe consistant en un enjoliveur de roue et une pompe à carburant en polycétone pour automobile produits par l'utilisation du copolymère de polycétone selon l'une quelconque des revendications 1 à 3.

5. Composant selon l'une quelconque des revendications 3 à 4, **caractérisé en ce que** la résistance aux chocs du composant mesurée dans une immersion d'huile moteur à 50 °C pendant 24 heures est conservée à plus de 85 % par rapport à la résistance aux chocs à 25 °C, humidité relative de 65 %, et un taux d'absorption d'humidité du composant mesuré à 50 °C, humidité relative de 90 % n'est pas supérieur à 1,5 %.

6. Composition de résine de polycétone **caractérisée en ce qu'**elle est produite par moulage par injection d'un mélange comprenant :
un copolymère de polycétone de monoxyde de carbone et d'au moins une oléfine, dont la viscosité intrinsèque est de 1,0 à 2,0 dl/g et la répartition du poids moléculaire est de 1,5 à 2,5 ; et
une ou deux matières additives supplémentaires sélectionnées dans le groupe consistant en les fibres de verre, un acrylonitrile butadiène styrène (ABS), les plastifiants à base de sulfonamide et une charge minérale,
et un ligand de composition de catalyseur utilisée dans une polymérisation du copolymère de polycétone est la ((2,2-diméthyl-1,3-dioxane-5,5-diyl)bis(méthylène))-bis(bis (2-méthoxyphényl)phosphine) .

7. Composition de résine de polycétone selon la revendication 6, **caractérisée en ce que** la charge minérale comprend une charge sélectionnée dans le groupe consistant en le talc, le kaolin, le mica, l'oxyde de magnésium et le carbonate de calcium.

8. Composant sélectionné dans le groupe consistant en un joint torique industriel et un revêtement de tuyau produits par l'utilisation de la composition de résine de polycétone selon l'une quelconque des revendications 6 ou 7.

9. Composant sélectionné parmi la chaîne à neige produite par l'utilisation de la composition de résine de polycétone selon l'une quelconque des revendications 6 ou 7.

10. Composant sélectionné dans le groupe consistant en un tube de carburant pour automobile, un capot moteur pour automobile, un tube de goulot de remplissage de carburant, un composant moteur, un support de bloc-cylindres de moteur, le collecteur d'admission d'air pour moteur, l'absorbeur, un réservoir de stockage de fluide de transmission, un boîtier de soupapes pour automobile, un couvre-culbuteurs, un réservoir d'assistance hydraulique de direction et une pompe à carburant produits par l'utilisation de la composition de résine de polycétone selon l'une quelconque des revendications 6 ou 7.

11. Composant selon l'une quelconque des revendications 8 à 10, **caractérisé en ce que** chaque taux de conservation de résistance à la traction du composant après immersion dans chacune parmi de l'eau et une huile moteur pendant 24 heures est pour chacune supérieur à 80 % et un taux d'absorption d'humidité du composant mesuré à 50 °C, humidité relative de 90 % n'est pas supérieur à 1,5 %.
